(19) **Europäisches Patentamt / European Patent Office / Office européen des brevets**

(11) **EP 4 557 842 A1**

(12) **EUROPEAN PATENT APPLICATION**
published in accordance with Art. 153(4) EPC

(43) Date of publication:
**21.05.2025 Bulletin 2025/21**

(21) Application number: **23851443.4**

(22) Date of filing: **29.06.2023**

(51) International Patent Classification (IPC):
**H04W 52/36** (2009.01)

(52) Cooperative Patent Classification (CPC):
**H04B 7/06; H04W 52/36; H04W 52/42**

(86) International application number:
**PCT/CN2023/103839**

(87) International publication number:
**WO 2024/032216 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210970373**

(71) Applicant: **Huawei Technologies Co., Ltd.**
**Shenzhen, Guangdong 518129 (CN)**

(72) Inventors:
• **LI, Tie**
  **Shenzhen, Guangdong 518129 (CN)**
• **YANG, Pei**
  **Shenzhen, Guangdong 518129 (CN)**
• **LIU, Xiaoqing**
  **Shenzhen, Guangdong 518129 (CN)**
• **YU, Zheng**
  **Shenzhen, Guangdong 518129 (CN)**
• **YANG, Yubo**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **INFORMATION TRANSMISSION METHOD, AND APPARATUS**

(57) This application provides an information transmission method and an apparatus. A terminal device may simultaneously transmit data to a network device by using a plurality of antenna panels, and a transmit power of each antenna panel may be determined based on information such as a maximum transmit power of the terminal device and a maximum transmit power corresponding to each antenna panel. The terminal device may further report information such as a power headroom and the maximum transmit power of each antenna panel, a power headroom of the terminal device, and the maximum transmit power of the terminal device to the network device, so that the network device can schedule, based on the information, the plurality of antenna panels in the terminal device to transmit information. The information transmission method and the apparatus provided in this application help improve utilization of the plurality of antenna panels in the terminal device, reduce power consumption of the antenna panels, improve system efficiency, and improve system performance.

FIG. 14

## Description

This application claims priority to Chinese Patent Application No. 202210970373.6, filed with the China National Intellectual Property Administration on August 12, 2022 and entitled "INFORMATION TRANSMISSION METHOD AND APPARATUS", which is incorporated herein by reference in its entirety.

## TECHNICAL FIELD

This application relates to the communication field, and more specifically, to an information transmission method and an apparatus.

## BACKGROUND

Compared with a low frequency band used in 4G LTE (long term evolution, LTE), a high frequency band (usually greater than 6 GHz) like 28 GHz, 39 GHz, or 60 GHz is usually used in 5G NR (new radio, NR), to meet requirements of three scenarios. A larger bandwidth and a higher transmission rate are achieved by introducing a high frequency. Because the frequency is high, a signal may severely fade during propagation in space. Therefore, a beamforming (beamforming, BF) technology is used in 5G NR to obtain a good directional gain, to increase a directional power in a transmit direction and improve a signal to interference plus noise ratio (signal to interference plus noise radio, SINR) at a receive end. Therefore, system performance is further improved. Usually, three architectures are used to implement beamforming: digital beamforming (digital beamforming, DBF), analog beamforming (analog beamforming, ABF), and hybrid beamforming (hybrid beamforming, HBF). In a 5G NR research process, a tradeoff between costs and performance is considered, and a hybrid beamforming technology including digital beamforming and analog beamforming is usually used. In an implementation process of the beamforming technology, an antenna panel (antenna panel) is a core component. A beam is sent or received by using the antenna panel. In 5G NR deployment and implementation, a directional beam is used. To meet wide-area coverage, a base station and a terminal are both deployed by using a plurality of antenna panels. Especially, for the terminal, to meet coverage and in a case of limited space and cost saving, antenna panel deployment has more important impact on performance.

In different scenarios, for a terminal device provided with a plurality of antenna panels, different usage manners of the plurality of antenna panels may be considered. For example, five antenna panels are configured for the terminal device. When the terminal is in a center of a cell, all the five antenna panels may be configured to transmit different data, to improve throughputs of the terminal and a system. When the terminal is at an edge of a cell, due to a power limitation, the five antenna panels may form different antenna panel combinations based on different power requirements. Antenna panels in a same combination send same data, and antenna panels in different combinations send different data. A power is increased, and cell coverage is expanded, to improve robustness of an edge cell.

When the terminal device communicates with a network device, it is worth considering how the network device can properly use a plurality of antenna panels in the terminal device to transmit information.

## SUMMARY

This application provides an information transmission method and an apparatus. A terminal device reports information such as a power headroom of an antenna panel, so that a network device can determine a working status of the antenna panel in the terminal device. This helps properly invoke a plurality of antenna panels in the terminal device to transmit information, and helps improve system efficiency.

According to a first aspect, an information transmission method is provided. The method is applied to a terminal device, the terminal device includes a first antenna panel, and the terminal device sends a first message. The first message indicates a power headroom of the first antenna panel.

In a possible implementation, before sending the first message, the terminal device generates the first message based on information such as a calculated power of the first antenna panel and a maximum transmit power of the first antenna panel.

In this technical solution, the terminal device may report the power headroom of the first antenna panel, and a network device that receives the power headroom of the first antenna panel may determine a working status of the first antenna panel based on the power headroom. This helps the network device schedule the first antenna panel. Compared with a method for determining a power headroom of the terminal device, this technical solution helps the network device schedule the antenna panel in the terminal device, improves utilization of a plurality of antenna panels, and improves system efficiency.

With reference to the first aspect, in some implementations of the first aspect, the terminal device includes a plurality of antenna panels, the plurality of antenna panels include a second antenna panel and the first antenna panel, and the first message further indicates one or more of the following: the maximum transmit power of the first antenna panel, a power headroom of the second antenna panel, a maximum transmit power of the second antenna panel, a power headroom of the terminal device, or a maximum transmit power of the terminal device.

In a possible implementation, the plurality of antenna panels in the terminal device may send or receive data of different cells. The different cells may be cells with different physical cell identifiers (physical cell identifier, PCI), or may be a serving cell and a neighboring cell, or may be a serving cell and a cell whose PCI is different from that of the serving cell.

In this technical solution, the first message may further indicate information such as the power headroom of the second antenna panel and the power headroom of the terminal device. The network device that receives the first message may further determine, based on the information, a solution of allocating a power to the first antenna panel in the terminal device. This helps reduce a probability that a problem like a fault or a data loss occurs in a communication process due to a sum of transmit powers of the plurality of antenna panels being greater than the maximum transmission power of the terminal device, helps reduce adverse impact of scheduling one antenna panel on another antenna panel, and improves stability of communication between the terminal device and the network device.

With reference to the first aspect, in some implementations of the first aspect, the terminal device includes the plurality of antenna panels, the plurality of antenna panels include the second antenna panel and the first antenna panel, and the method further indicates to send a second message. The second message indicates the power headroom of the second antenna panel.

In this technical solution, the terminal device may separately send information related to the working status of the first antenna panel and information related to a working status of the second antenna panel. Because there is a correspondence between an antenna panel and a channel, information about different antenna panels is sent by using different antenna panels. This helps the network device determine a status of a specific antenna panel based on the correspondence between an antenna panel and a channel, further helps perform operations such as power allocation and scheduling on the determined antenna panel, and helps improve efficiency of scheduling the plurality of antenna panels in the terminal device.

With reference to the first aspect, in some implementations of the first aspect, the second message further indicates one or more of the following: the power headroom of the first antenna panel, the maximum transmit power of the first antenna panel, the maximum transmit power of the second antenna panel, the power headroom of the terminal device, or the maximum transmit power of the terminal device.

Information such as power headrooms of the plurality of antenna panels and the power headroom of the terminal device may also be included in the second message. This technical solution provides another manner of reporting working statuses of the plurality of antenna panels in the terminal device and information related to the working status of the terminal device. Implementation of this technical solution helps improve stability and efficiency of reporting information by the terminal device, and helps improve system efficiency.

With reference to the first aspect, in some implementations of the first aspect, the terminal device sends a third message. The third message indicates the power headroom of the terminal device and/or the maximum transmit power of the terminal device.

Alternatively, the terminal device may separately report the power headroom of the terminal device and/or the maximum transmit power of the terminal device. When information such as the power headrooms of the plurality of antenna panels is simultaneously reported, the information about the working status of the terminal device is separately reported. This helps the network device distinguish the power headroom of the terminal device from a plurality of pieces of information, helps the network device properly allocate a power to the terminal device, helps improve power utilization of the terminal device, and improves system efficiency.

In a possible implementation, one or more of the power headroom of the first antenna panel, the power headroom of the second antenna panel, or the power headroom of the terminal device are used by the network device to determine a transmission power of the first antenna panel and/or a transmission power of the second antenna panel.

The transmission power may include a transmit power and a receive power. The transmission power of the antenna panel being determined may be understood as that the network device may schedule the antenna panel to send and receive information after receiving the information.

The information reported by the terminal device to the network device may be used by the network device to determine allocation of powers to the plurality of antenna panels in the terminal device and scheduling of the antenna panels. This helps improve utilization of the plurality of antenna panels, helps properly allocate a power to the terminal device, and improves system efficiency.

With reference to the first aspect, in some implementations of the first aspect, the power headroom of the first antenna panel is determined based on a first calculated power and the maximum transmit power of the first antenna panel, the first calculated power is a calculated power of the first antenna panel, and the first calculated power is related to the maximum transmit power of the terminal device.

With reference to the first aspect, in some implementations of the first aspect, the power headroom of the second antenna panel is determined based on a second calculated power and the maximum transmit power of the second antenna panel, the second calculated power is a calculated power of the second antenna panel, and the second calculated power is related to the maximum transmit power of the terminal device.

With reference to the first aspect, in some implementations of the first aspect, the power headroom of the terminal device is determined based on the maximum transmit power of the terminal device and one or more of the following: the maximum transmit power of the first antenna panel, the maximum transmit power of the second antenna panel, the first calculated power, or the second calculated power.

In the foregoing technical solution, the power headroom of the antenna panel and/or the power headroom of the terminal device is determined based on parameters such as the calculated power of the antenna panel, the maximum transmit power of the antenna panel, and the maximum transmit power of the terminal device. This helps determine the power headroom of each antenna panel in the terminal device and the power headroom of the terminal device, to properly allocate a power to the terminal device and properly schedule the plurality of antenna panels.

With reference to the first aspect, in some implementations of the first aspect, a type of the first message and a type of the second message are determined based on one or more of the following information: whether the first message and the second message are transmitted on a same channel; whether to trigger the first antenna panel and/or the second antenna panel to send the first message and/or the second message; or a manner of sending the first message and the second message.

The sending manner may also be referred to as a reporting manner. When the first message and the second message are transmitted on different channels, a reporting manner of the first message and the second message may be classified into joint reporting and separate reporting.

In this technical solution, the type of the message may be determined in one or more of the foregoing manners, to determine a type of the calculated power of the antenna panel. This helps determine the power headroom of the antenna panel, and helps implement power allocation for the plurality of antenna panels.

With reference to the first aspect, in some implementations of the first aspect, when the first antenna panel and the second antenna panel are associated with different channels, the power headroom of the first antenna panel and/or the power headroom of the second antenna panel are/is further determined based on one or more of the following information related to the different channels: a channel priority, channel content, or a channel periodicity.

The first antenna panel and the second antenna panel are associated with different channels, that is, a message sent by the first antenna panel and a message sent by the second antenna panel are transmitted on different channels.

In this technical solution, the terminal device may further determine, based on a factor like a priority, content, or a periodicity of a channel associated with the antenna panel, an order or a priority of allocating a power to each of the plurality of antenna panels. Because there is a correspondence between an antenna panel and a channel, the priority of the channel may be understood as a priority of the antenna panel. When the terminal device reports a power headroom report of only one antenna panel, this helps the network device determine the antenna panel corresponding to the reported power headroom report, helps improve efficiency of scheduling the plurality of antenna panels in the terminal device, and help improve system efficiency.

With reference to the first aspect, in some implementations of the first aspect, the first antenna panel and the second antenna panel are two antenna panels for simultaneous transmitting and/or simultaneous receiving.

In this technical solution, the first antenna panel and the second antenna panel are set as two antenna panels for simultaneous transmitting and/or simultaneous receiving. The two antenna panels may perform operations such as joint sending and separate sending. For transmission of different types of information, transmission tasks need to be performed by different types of antenna panels. The two antenna panels for simultaneous transmitting or simultaneous receiving are set, to help improve a rate at which the terminal device transmits information by using the antenna panel, and improve system efficiency.

According to a second aspect, an information transmission method is provided. The method is applied to a terminal device, the terminal device includes a plurality of antenna panels, and the plurality of antenna panels include a first antenna panel and a second antenna panel. The terminal device sends a channel by using the first antenna panel and/or the second antenna panel. A transmit power of the first antenna panel is a first transmit power, and a transmit power of the second antenna panel is a second transmit power.

The first transmit power is determined based on one or more of the following: a calculated power of the first antenna panel, a maximum transmit power of the terminal device, a maximum transmit power of the first panel, or a maximum transmit power of the second antenna panel. The second transmit power is determined based on one or more of the following: a calculated power of the second antenna panel, the maximum transmit power of the terminal device, the maximum transmit power of the first panel, or the maximum transmit power of the second antenna panel.

That the channel is sent by using the antenna panel may also be understood as that content of the channel is sent by using the antenna panel, that is, a signal is sent by using the antenna panel.

In this technical solution, the terminal device may transmit data and information by using the plurality of antenna panels, and may further determine a transmission power of each antenna panel based on the maximum transmit power of the terminal device and a maximum transmit power of the antenna panel, to improve utilization of each antenna panel, and improve system efficiency.

With reference to the second aspect, in some implementations of the second aspect, if a sum of the calculated power of the first antenna panel and the calculated power of the second antenna panel is less than or equal to the maximum transmit power of the terminal device, the first transmit power is the first calculated power, and the second transmit power is the second calculated power.

In this technical solution, provided that the maximum power of the terminal device is not exceeded, information transmission on the antenna panel is performed based on a calculated power of each antenna panel, and powers of the plurality of antenna panels do not need to be reallocated. This helps improve efficiency of scheduling the plurality of antenna panels in the terminal device by the network device, and also helps improve efficiency of processing information reported by the terminal device by the network device.

With reference to the second aspect, in some implementations of the second aspect, if a sum of the calculated power of the first antenna panel and the calculated power of the second antenna panel is greater than the maximum transmit power of the terminal device, a sum of the first transmit power and the second transmit power is equal to the maximum transmit power of the terminal device.

In this technical solution, when a sum of calculated powers of the plurality of antenna panels exceeds the maximum transmit power of the terminal device, transmit powers of the plurality of antenna panels may be allocated based on a case in which the terminal device performs information transmission at a full power. This helps increase a rate of information transmission between the terminal device and the network device, and helps improve system efficiency.

With reference to the second aspect, in some implementations of the second aspect, if a sum of the calculated power of the first antenna panel and the calculated power of the second antenna panel is greater than the maximum transmit power of the terminal device, a sum of the first transmit power and the second transmit power is less than the maximum transmit power of the terminal device.

In this technical solution, when a sum of calculated powers of the plurality of antenna panels exceeds the maximum transmit power of the terminal device, transmit powers of the plurality of antenna panels may be allocated based on a case in which the terminal device performs information transmission at a non-full power, so that the terminal device can reserve a specific power to handle another action that consumes a power, for example, handle a burst information transmission requirement. Implementation of this technical solution helps improve adaptability of the terminal device in different data transmission scenarios, and helps improve stability of communication between the terminal device and the network device.

With reference to the second aspect, in some implementations of the second aspect, the first transmit power is directly proportional to the first calculated power, and the second transmit power is directly proportional to the second calculated power.

With reference to the second aspect, in some implementations of the second aspect, the first transmit power is directly proportional to the maximum transmit power of the terminal device, and the second transmit power is directly proportional to the maximum transmit power of the terminal device.

With reference to the second aspect, in some implementations of the second aspect, neither the first transmit power nor the second transmit power is 0.

With reference to the second aspect, in some implementations of the second aspect, the first transmit power is the first calculated power or the maximum transmit power of the terminal device, or the second transmit power is the second calculated power or the maximum transmit power of the terminal device.

With reference to the second aspect, in some implementations of the second aspect, the first transmit power is the first calculated power, and the second transmit power is greater than or equal to 0; or the second transmit power is the second calculated power, and the first transmit power is greater than or equal to 0.

With reference to the second aspect, in some implementations of the second aspect, the first transmit power is less than or equal to the maximum transmit power of the first antenna panel, and the second transmit power is less than or equal to the maximum transmit power of the second antenna panel.

In the foregoing technical solution, the terminal device may allocate, to the plurality of antenna panels in different manners, powers for information transmission. This helps improve flexibility of allocating powers to the antenna panels by the terminal device, and helps improve adaptability of the terminal device in different information transmission scenarios.

With reference to the second aspect, in some implementations of the second aspect, when the first antenna panel and the second antenna panel are associated with different channels, the first transmit power and the second transmit power are further determined based on one or more of the following information related to the different channels: a channel priority, channel content, or a channel periodicity.

In this technical solution, the terminal device may further determine, based on a factor like a priority, content, or a periodicity of a channel associated with the antenna panel, an order or a priority of allocating a power to each of the plurality of antenna panels. This helps the terminal device allocate powers based on actual working content or statuses of the antenna panels, and helps improve efficiency of communication between the terminal device and the network device. Different work content of the antenna panels corresponds to different actual application scenarios of the terminal device.

Implementation of this technical solution further helps improve actual use experience of a user of the terminal device.

It should be noted that the power headroom of the antenna panel and the power headroom of the terminal device that are determined in the second aspect may be reported to the network device in the first aspect.

For related explanations and corresponding beneficial effect of the following technical solutions, refer to the first aspect and/or the second aspect. For brevity, details are not described below again.

According to a third aspect, an information transmission method is provided. The method is applied to a network device, and the network device receives a first message. The first message indicates a power headroom of a first antenna panel in a terminal device.

With reference to the third aspect, in some implementations of the third aspect, the terminal device further includes a second antenna panel, and the first message further indicates one or more of the following: a maximum transmit power of the first antenna panel, a power headroom of the second antenna panel, a maximum transmit power of the second antenna panel, a power headroom of the terminal device, or a maximum transmit power of the terminal device.

With reference to the third aspect, in some implementations of the third aspect, the network device receives a second message from the terminal device. The second message indicates the power headroom of the second antenna panel in the terminal device.

With reference to the third aspect, in some implementations of the third aspect, the second message further indicates one or more of the following: the power headroom of the first antenna panel, the maximum transmit power of the first antenna panel, the maximum transmit power of the second antenna panel, the power headroom of the terminal device, or the maximum transmit power of the terminal device.

With reference to the third aspect, in some implementations of the third aspect, the network device receives a third message from the terminal device. The third message indicates the power headroom of the terminal device and/or the maximum transmit power of the terminal device.

With reference to the third aspect, in some implementations of the third aspect, the network device sends configuration information to the terminal device. The configuration information is used to schedule the first antenna panel and/or the second antenna panel in the terminal device.

With reference to the third aspect, in some implementations of the third aspect, the configuration information is further used to determine a transmission power of the first antenna panel and/or a transmission power of the second antenna panel.

According to a fourth aspect, an information transmission method is provided. The method is applied to a network device, the network device sends configuration information to a terminal device, and the configuration information is used by the terminal device to determine a calculated power of an antenna panel.

According to a fifth aspect, a communication apparatus is provided. The communication apparatus includes a first antenna panel, the communication apparatus further includes a transceiver unit, the transceiver unit is configured to send a first message, and the first message indicates a power headroom of the first antenna panel.

It should be noted that the antenna panel may also be referred to as an antenna unit, and may be understood as a functional module configured to implement a function of an antenna in the communication apparatus.

With reference to the fifth aspect, in some implementations of the fifth aspect, the communication apparatus includes a plurality of antenna panels, the plurality of antenna panels include a second antenna panel and the first antenna panel, and the first message further indicates one or more of the following: a maximum transmit power of the first antenna panel, a power headroom of the second antenna panel, a maximum transmit power of the second antenna panel, a power headroom of the communication apparatus, or a maximum transmit power of the communication apparatus.

With reference to the fifth aspect, in some implementations of the fifth aspect, the communication apparatus includes the plurality of antenna panels, the plurality of antenna panels include the second antenna panel and the first antenna panel, and the transceiver unit is further configured to send a second message. The second message indicates the power headroom of the second antenna panel.

With reference to the fifth aspect, in some implementations of the fifth aspect, the second message further indicates one or more of the following: the power headroom of the first antenna panel, the maximum transmit power of the first antenna panel, the maximum transmit power of the second antenna panel, the power headroom of the communication apparatus, or the maximum transmit power of the communication apparatus.

With reference to the fifth aspect, in some implementations of the fifth aspect, the transceiver unit is further configured to send a third message. The third message indicates the power headroom of the communication apparatus and/or the maximum transmit power of the communication apparatus.

**In** a possible implementation, one or more of the power headroom of the first antenna panel, the power headroom of the second antenna panel, or the power headroom of the communication apparatus are used by the network device to determine a transmission power of the first antenna panel and/or a transmission power of the second antenna panel.

With reference to the fifth aspect, in some implementations of the fifth aspect, the power headroom of the first antenna panel is determined based on a first calculated power and the maximum transmit power of the first antenna panel, the first calculated power is a calculated power of the first antenna panel, and the first calculated power is related to the maximum transmit power of the communication apparatus.

With reference to the fifth aspect, in some implementations of the fifth aspect, the power headroom of the second antenna panel is determined based on a second calculated power and the maximum transmit power of the second antenna panel, the second calculated power is a calculated power of the second antenna panel, and the second calculated power is related to the maximum transmit power of the communication apparatus.

With reference to the fifth aspect, in some implementations of the fifth aspect, the power headroom of the communication apparatus is determined based on the maximum transmit power of the terminal device and one or more of the following: the maximum transmit power of the first antenna panel, the maximum transmit power of the second antenna panel, the first calculated power, or the second calculated power.

With reference to the fifth aspect, in some implementations of the fifth aspect, a type of the first message and a type of the second message are determined based on one or more of the following information: whether the first message and the second message are transmitted on a same channel; whether to trigger the first antenna panel and/or the second antenna panel to send the first message and/or the second message; or a manner of sending the first message and the second message.

With reference to the fifth aspect, in some implementations of the fifth aspect, when the first antenna panel and the second antenna panel are associated with different channels, the power headroom of the first antenna panel and/or the power headroom of the second antenna panel are/is further determined based on one or more of the following information related to the different channels: a channel priority, channel content, or a channel periodicity.

With reference to the fifth aspect, in some implementations of the fifth aspect, the first antenna panel and the second antenna panel are two antenna panels for simultaneous transmitting and/or simultaneous receiving.

According to a sixth aspect, a communication apparatus is provided. The communication apparatus includes a processing unit, the communication apparatus includes a plurality of antenna panels, and the plurality of antenna panels include a first antenna panel and a second antenna panel. The processing unit is configured to send a channel by using the first antenna panel and/or the second antenna panel. A transmit power of the first antenna panel is a first transmit power, and a transmit power of the second antenna panel is a second transmit power.

The first transmit power is determined based on one or more of the following: a calculated power of the first antenna panel, a maximum transmit power of the communication apparatus, a maximum transmit power of the first panel, or a maximum transmit power of the second antenna panel. The second transmit power is determined based on one or more of the following: a calculated power of the second antenna panel, the maximum transmit power of the communication apparatus, the maximum transmit power of the first panel, or the maximum transmit power of the second antenna panel.

With reference to the sixth aspect, in some implementations of the sixth aspect, if a sum of the calculated power of the first antenna panel and the calculated power of the second antenna panel is less than or equal to the maximum transmit power of the communication apparatus, the first transmit power is the first calculated power, and the second transmit power is the second calculated power.

With reference to the sixth aspect, in some implementations of the sixth aspect, if a sum of the calculated power of the first antenna panel and the calculated power of the second antenna panel is greater than the maximum transmit power of the communication apparatus, a sum of the first transmit power and the second transmit power is equal to the maximum transmit power of the communication apparatus.

With reference to the sixth aspect, in some implementations of the sixth aspect, if a sum of the calculated power of the first antenna panel and the calculated power of the second antenna panel is greater than the maximum transmit power of the communication apparatus, a sum of the first transmit power and the second transmit power is less than the maximum transmit power of the communication apparatus.

With reference to the sixth aspect, in some implementations of the sixth aspect, the first transmit power is directly proportional to the first calculated power, and the second transmit power is directly proportional to the second calculated power.

With reference to the sixth aspect, in some implementations of the sixth aspect, the first transmit power is directly proportional to the maximum transmit power of the communication apparatus, and the second transmit power is directly proportional to the maximum transmit power of the communication apparatus.

With reference to the sixth aspect, in some implementations of the sixth aspect, neither the first transmit power nor the second transmit power is 0.

With reference to the sixth aspect, in some implementations of the sixth aspect, the first transmit power is the first calculated power or the maximum transmit power of the communication apparatus, or the second transmit power is the second calculated power or the maximum transmit power of the communication apparatus.

With reference to the sixth aspect, in some implementations of the sixth aspect, the first transmit power is the first calculated power, and the second transmit power is greater than or equal to 0; or the second transmit power is the second calculated power, and the first transmit power is greater than or equal to 0.

With reference to the sixth aspect, in some implementations of the sixth aspect, the first transmit power is less than or equal to the maximum transmit power of the first antenna panel, and the second transmit power is less than or equal to the maximum transmit power of the second antenna panel.

With reference to the sixth aspect, in some implementations of the sixth aspect, when the first antenna panel and the second antenna panel are associated with different channels, the first transmit power and the second transmit power are further determined based on one or more of the following information related to the different channels: a channel priority, channel content, or a channel periodicity.

According to a seventh aspect, a communication apparatus is provided. The communication apparatus includes a transceiver unit, the transceiver unit is configured to receive a first message, and the first message indicates a power headroom of a first antenna panel in a terminal device.

With reference to the seventh aspect, in some implementations of the seventh aspect, the terminal device further includes a second antenna panel, and the first message further indicates one or more of the following: a maximum transmit power of the first antenna panel, a power headroom of the second antenna panel, a maximum transmit power of the second antenna panel, a power headroom of the terminal device, or a maximum transmit power of the terminal device.

With reference to the seventh aspect, in some implementations of the seventh aspect, the transceiver unit is further configured to receive a second message from the terminal device. The second message indicates the power headroom of the second antenna panel in the terminal device.

With reference to the seventh aspect, in some implementations of the seventh aspect, the second message further indicates one or more of the following: the power headroom of the first antenna panel, the maximum transmit power of the first antenna panel, the maximum transmit power of the second antenna panel, the power headroom of the terminal device, or the maximum transmit power of the terminal device.

With reference to the seventh aspect, in some implementations of the seventh aspect, the transceiver unit is further configured to receive a third message from the terminal device. The third message indicates the power headroom of the terminal device and/or the maximum transmit power of the terminal device.

With reference to the seventh aspect, in some implementations of the seventh aspect, the transceiver unit is further configured to send configuration information. The configuration information is used to schedule the first antenna panel and/or the second antenna panel in the terminal device.

With reference to the seventh aspect, in some implementations of the seventh aspect, the configuration information is further used to determine a transmission power of the first antenna panel and/or a transmission power of the second antenna panel.

According to an eighth aspect, a communication apparatus is provided. The communication apparatus includes a transceiver unit, the transceiver unit is configured to send configuration information to a terminal device, and the configuration information is used by the terminal device to determine a calculated power of an antenna panel in the terminal device.

According to a ninth aspect, a communication device is provided. The communication device includes a first antenna panel. The communication device includes a processor and a memory, the memory stores one or more computer programs, and the one or more computer programs include instructions. When the instructions are executed by the processor, the processor is configured to send a first message. The first message indicates a power headroom of the first antenna panel.

With reference to the ninth aspect, in some implementations of the ninth aspect, the communication device includes a plurality of antenna panels, the plurality of antenna panels include a second antenna panel and the first antenna panel, and the first message further indicates one or more of the following: a maximum transmit power of the first antenna panel, a power headroom of the second antenna panel, a maximum transmit power of the second antenna panel, a power headroom of the communication device, or a maximum transmit power of the communication device.

With reference to the ninth aspect, in some implementations of the ninth aspect, the communication device includes the plurality of antenna panels, the plurality of antenna panels include the second antenna panel and the first antenna panel, and the processor is further configured to send a second message. The second message indicates the power headroom of the second antenna panel.

With reference to the ninth aspect, in some implementations of the ninth aspect, the second message further indicates one or more of the following: the power headroom of the first antenna panel, the maximum transmit power of the first antenna panel, the maximum transmit power of the second antenna panel, the power headroom of the communication device, or the maximum transmit power of the communication device.

With reference to the ninth aspect, in some implementations of the ninth aspect, the processor is further configured to send a third message. The third message indicates the power headroom of the communication device and/or the maximum transmit power of the communication device.

In a possible implementation, one or more of the power headroom of the first antenna panel, the power headroom of the second antenna panel, or the power headroom of the communication device are used by the network device to determine a transmission power of the first antenna panel and/or a transmission power of the second antenna panel.

With reference to the ninth aspect, in some implementations of the ninth aspect, the power headroom of the first antenna panel is determined based on a first calculated power and the maximum transmit power of the first antenna panel, the first calculated power is a calculated power of the first antenna panel, and the first calculated power is related to the maximum transmit power of the communication device.

With reference to the ninth aspect, in some implementations of the ninth aspect, the power headroom of the second antenna panel is determined based on a second calculated power and the maximum transmit power of the second antenna panel, the second calculated power is a calculated power of the second antenna panel, and the second calculated power is related to the maximum transmit power of the communication device.

With reference to the ninth aspect, in some implementations of the ninth aspect, the power headroom of the communication device is determined based on the maximum transmit power of the communication device and one or more of the following: the maximum transmit power of the first antenna panel, the maximum transmit power of the second antenna panel, the first calculated power, or the second calculated power.

With reference to the ninth aspect, in some implementations of the ninth aspect, a type of the first message and a type of the second message are determined based on one or more of the following information: whether the first message and the second message are transmitted on a same channel; whether to trigger the first antenna panel and/or the second antenna panel to send the first message and/or the second message; or a manner of sending the first message and the second message.

With reference to the ninth aspect, in some implementations of the ninth aspect, when the first antenna panel and the second antenna panel are associated with different channels, the power headroom of the first antenna panel and/or the power headroom of the second antenna panel are/is further determined based on one or more of the following information related to the different channels: a channel priority, channel content, or a channel periodicity.

With reference to the ninth aspect, in some implementations of the ninth aspect, the first antenna panel and the second antenna panel are two antenna panels for simultaneous transmitting and/or simultaneous receiving.

According to a tenth aspect, a communication device is provided. The communication device includes a plurality of antenna panels, and the plurality of antenna panels include a first antenna panel and a second antenna panel. The communication device includes a processor and a memory, the memory stores one or more computer programs, and the one or more computer programs include instructions. When the instructions are executed by the processor, the processor is configured to:

send a channel by using the first antenna panel and/or the second antenna panel, where a transmit power of the first antenna panel is a first transmit power, and a transmit power of the second antenna panel is a second transmit power.

The first transmit power is determined based on one or more of the following: a calculated power of the first antenna panel, a maximum transmit power of the communication device, a maximum transmit power of the first panel, or a maximum transmit power of the second antenna panel. The second transmit power is determined based on one or more of the following: a calculated power of the second antenna panel, the maximum transmit power of the communication device, the maximum transmit power of the first panel, or the maximum transmit power of the second antenna panel.

With reference to the tenth aspect, in some implementations of the tenth aspect, if a sum of the calculated power of the first antenna panel and the calculated power of the second antenna panel is less than or equal to the maximum transmit power of the communication device, the first transmit power is the first calculated power, and the second transmit power is the second calculated power.

With reference to the tenth aspect, in some implementations of the tenth aspect, if a sum of the calculated power of the first antenna panel and the calculated power of the second antenna panel is greater than the maximum transmit power of the communication device, a sum of the first transmit power and the second transmit power is equal to the maximum transmit power of the communication device.

With reference to the tenth aspect, in some implementations of the tenth aspect, if a sum of the calculated power of the first antenna panel and the calculated power of the second antenna panel is greater than the maximum transmit power of the communication device, a sum of the first transmit power and the second transmit power is less than the maximum transmit power of the communication device.

With reference to the tenth aspect, in some implementations of the tenth aspect, the first transmit power is directly proportional to the first calculated power, and the second transmit power is directly proportional to the second calculated power.

With reference to the tenth aspect, in some implementations of the tenth aspect, the first transmit power is directly proportional to the maximum transmit power of the communication device, and the second transmit power is directly proportional to the maximum transmit power of the communication device.

With reference to the tenth aspect, in some implementations of the tenth aspect, neither the first transmit power nor the second transmit power is 0.

With reference to the tenth aspect, in some implementations of the tenth aspect, the first transmit power is the first calculated power or the maximum transmit power of the communication device, or the second transmit power is the second calculated power or the maximum transmit power of the communication device.

With reference to the tenth aspect, in some implementations of the tenth aspect, the first transmit power is the first calculated power, and the second transmit power is greater than or equal to 0; or the second transmit power is the second calculated power, and the first transmit power is greater than or equal to 0.

With reference to the tenth aspect, in some implementations of the tenth aspect, the first transmit power is less than or equal to the maximum transmit power of the first antenna panel, and the second transmit power is less than or equal to the maximum transmit power of the second antenna panel.

With reference to the tenth aspect, in some implementations of the tenth aspect, when the first antenna panel and the second antenna panel are associated with different channels, the first transmit power and the second transmit power are further determined based on one or more of the following information related to the different channels: a channel priority, channel content, or a channel periodicity.

According to an eleventh aspect, a communication device is provided. The communication device includes a processor and a memory, the memory stores one or more computer programs, the one or more computer programs include instructions, and when the instructions are executed by the processor, the processor is configured to receive a first message. The first message indicates a power headroom of a first antenna panel in a terminal device.

With reference to the eleventh aspect, in some implementations of the eleventh aspect, the terminal device further includes a second antenna panel, and the first message further indicates one or more of the following: a maximum transmit power of the first antenna panel, a power headroom of the second antenna panel, a maximum transmit power of the second antenna panel, a power headroom of the terminal device, or a maximum transmit power of the terminal device.

With reference to the eleventh aspect, in some implementations of the eleventh aspect, the processor is further configured to receive a second message from the terminal device. The second message indicates the power headroom of the second antenna panel in the terminal device.

With reference to the eleventh aspect, in some implementations of the eleventh aspect, the second message further indicates one or more of the following: the power headroom of the first antenna panel, the maximum transmit power of the first antenna panel, the maximum transmit power of the second antenna panel, the power headroom of the terminal device, or the maximum transmit power of the terminal device.

With reference to the eleventh aspect, in some implementations of the eleventh aspect, the processor is further configured to receive a third message from the terminal device. The third message indicates the power headroom of the terminal device and/or the maximum transmit power of the terminal device.

With reference to the eleventh aspect, in some implementations of the eleventh aspect, the processor is further configured to send configuration information. The configuration information is used to schedule the first antenna panel and/or the second antenna panel in the terminal device.

With reference to the eleventh aspect, in some implementations of the eleventh aspect, the configuration information is further used to determine a transmission power of the first antenna panel and/or a transmission power of the second antenna panel.

According to a twelfth aspect, a communication device is provided. The communication device includes a processor and a memory, the memory stores one or more computer programs, the one or more computer programs include instructions, and when the instructions are executed by the processor, the processor is configured to send configuration information to a terminal device. The configuration information is used by the terminal device to determine a calculated power of an antenna panel in the terminal device.

According to a thirteenth aspect, this application provides a computer program product. The computer program product includes computer program code, and when the computer program code is run on a computer, the method in the first aspect is performed.

According to a fourteenth aspect, this application provides a computer program product. The computer program product includes computer program code, and when the computer program code is run on a computer, the method in the second aspect is performed.

According to a fifteenth aspect, this application provides a computer program product. The computer program product includes computer program code, and when the computer program code is run on a computer, the method in the third aspect is performed.

According to a sixteenth aspect, this application provides a computer program product. The computer program product includes computer program code, and when the computer program code is run on a computer, the method in the fourth aspect is performed.

According to a seventeenth aspect, this application provides a computer-readable storage medium. The computer-readable storage medium stores computer instructions. When the computer instructions are run on a computer, the method in the first aspect is performed.

According to an eighteenth aspect, this application provides a computer-readable storage medium. The computer-readable storage medium stores computer instructions. When the computer instructions are run on a computer, the method in the second aspect is performed.

According to a nineteenth aspect, this application provides a computer-readable storage medium. The computer-readable storage medium stores computer instructions. When the computer instructions are run on a computer, the method in the third aspect is performed.

According to a twentieth aspect, this application provides a computer-readable storage medium. The computer-readable storage medium stores computer instructions. When the computer instructions are run on a computer, the method in the fourth aspect is performed.

According to a twenty-first aspect, a chip is provided, and includes a processor configured to read instructions stored in a memory. When the processor executes the instructions, the chip is enabled to implement the method in the first aspect.

According to a twenty-second aspect, a chip is provided, and includes a processor configured to read instructions stored in a memory. When the processor executes the instructions, the chip is enabled to implement the method in the second aspect.

According to a twenty-third aspect, a chip is provided, and includes a processor configured to read instructions stored in a memory. When the processor executes the instructions, the chip is enabled to implement the method in the third aspect.

According to a twenty-fourth aspect, a chip is provided, and includes a processor configured to read instructions stored in a memory. When the processor executes the instructions, the chip is enabled to implement the method in the fourth aspect.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory memory, for example, a read-only memory. The memory and the processor may be integrated on a same chip, or may be separately disposed on different chips. A type of the memory and a manner of disposing the memory and the processor are not limited in embodiments of this application.

## BRIEF DESCRIPTION OF DRAWINGS

FIG. 1 is a diagram of an application scenario to which an embodiment of this application is applicable;
FIG. 2 is a diagram of another application scenario to which an embodiment of this application is applicable;
FIG. 3 is a diagram of an information transmission method according to an embodiment of this application;
FIG. 4 is a diagram of another information transmission method according to an embodiment of this application;
FIG. 5 is a diagram of a method for determining a PHR type according to an embodiment of this application;
FIG. 6 is a diagram of another information transmission method according to an embodiment of this application;
FIG. 7 is a diagram of another information transmission method according to an embodiment of this application;
FIG. 8 is a diagram of a PHR format according to an embodiment of this application;
FIG. 9 is a diagram of another PHR format according to an embodiment of this application;
FIG. 10 is a diagram of another PHR format according to an embodiment of this application;
FIG. 11 is a diagram of another PHR format according to an embodiment of this application;
FIG. 12 is a diagram of another PHR format according to an embodiment of this application;
FIG. 13 is a diagram of another PHR format according to an embodiment of this application;
FIG. 14 is a diagram of an information transmission method according to an embodiment of this application;
FIG. 15 is a diagram of a communication apparatus according to an embodiment of this application; and
FIG. 16 is a diagram of a communication device according to an embodiment of this application.

## DESCRIPTION OF EMBODIMENTS

The following describes technical solutions of this application with reference to accompanying drawings.

A wireless communication system includes communication devices, and the communication devices may perform wireless communication based on an air interface resource. The communication devices may include a network device and a terminal device, and the network device may also be referred to as a base station device. The air interface resource may include at least one of a time domain resource, a frequency domain resource, a code resource, and a spatial resource. In embodiments of this application, "at least one" may alternatively be described as one or more, and "more" may be two, three, four, or more. This is not limited in this application.

In embodiments of this application, "first", "second", "third", "A", "B", "C", "D", and the like are used for distinguishing between technical features described by them. There is no chronological order or no size order between the technical features described by "first", "second", "third", "A", "B", "C", and "D".

The technical solutions of embodiments of this application may be applied to various communication systems, such as a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, or a new radio (new radio, NR) system.

The terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on the surface of water (for example, in a steamship); or may be deployed in the air (for example, on an airplane, a balloon, and a satellite). The terminal device may be user equipment (user equipment, UE). The UE includes a handheld device, a vehicle-mounted device, a wearable device, or a computing device with a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of a terminal may be a terminal; or may be an apparatus, for example, a chip system, that can support the terminal in implementing the function. The apparatus may be mounted in the terminal. In embodiments of this application, the chip system may include a chip, or may include a chip and another discrete component. In the technical solutions provided in embodiments of this application, the technical solutions provided in embodiments of this application are described by using an example in which the apparatus for implementing a function of the terminal is a terminal and the terminal is UE.

The network device in embodiments of this application includes an access network device, for example, a base station (base station, BS), and the BS may be a device that is deployed in a radio access network and that can perform wireless communication with the terminal. The base station may be in a plurality of forms such as a macro base station, a micro base station, a relay station, and an access point. For example, the base station in embodiments of this application may be a base station in 5G or an evolved NodeB (evolved NodeB, eNB) in LTE. The base station in 5G may also be referred to as a transmission/reception point (transmission/reception point, TRP) or a 5G NodeB (next-generation NodeB, gNB). In embodiments of this application, an apparatus configured to implement a function of the network device may be the network device, or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus for implementing the function of the network device is a network device and the network device is a base station.

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be briefly referred to as "communication", and the term "communication" may also be described as "data transmission", "information transmission", or "transmission".

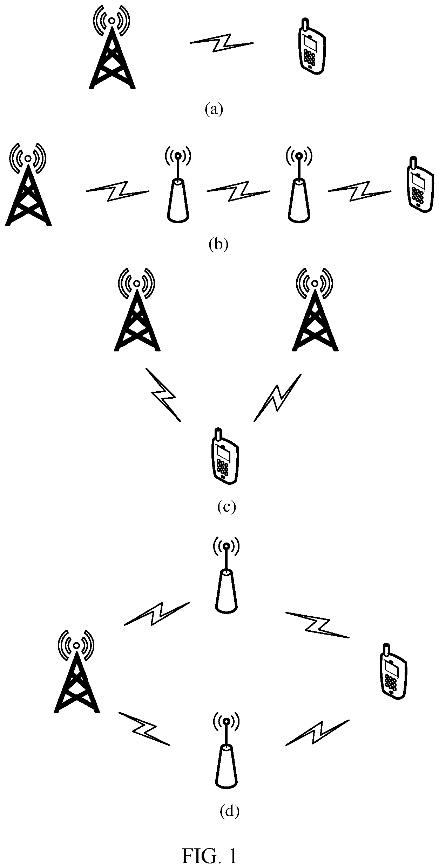

FIG. 1 is a diagram of a communication scenario to which an embodiment of this application is applicable.

This application is for protocol frameworks such as 5G NR and 5G-Advanced, and may be applied to a plurality of mobile communication scenarios, for example, a scenario of point-to-point transmission between a base station and user equipment, between a transmission/reception point and user equipment, and between user equipments, a scenario of multi-hop/relay transmission between a base station and user equipment, and a scenario of dual connectivity (dual connectivity, DC) or multi-connectivity between a plurality of base stations and user equipments. FIG. 1 is a diagram of a scenario of a communication system to which this application is applied. It should be noted that FIG. 1 is merely an example, and does not limit a network architecture to which this application is applicable. In addition, transmission modes such as uplink transmission, downlink transmission, access link transmission, backhaul (backhaul) link transmission, and sidelink (sidelink) transmission are not limited in this application.

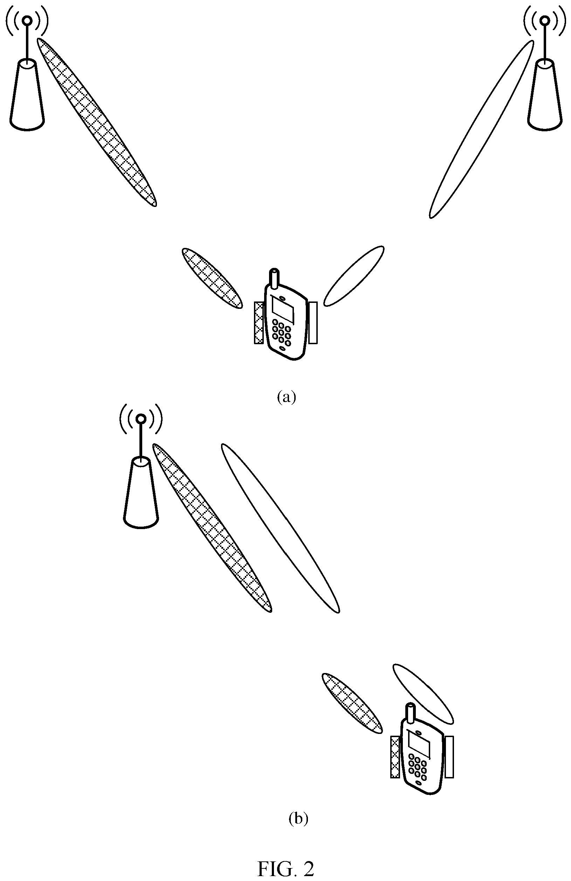

FIG. 2 is a diagram of another communication scenario to which an embodiment of this application is applicable.

A terminal device may include a plurality of antenna panels, and the plurality of antenna panels may be configured to implement data transmission in different scenarios based on requirements of the terminal device. For example, when a communication environment between the terminal device and a network device is good, the plurality of antenna panels in the terminal device may be configured to transmit different data, to improve throughputs of the terminal device and a system. When the communication environment between the terminal device and the network device is not good, the plurality of antenna panels in the terminal device may be configured to form different antenna panel combinations, to improve powers of the terminal device and the network device in data transmission in a specific direction, and improve stability of communication between the terminal and the network device.

The plurality of antenna panels in the terminal device may perform data transmission with a single transmission/reception point (single transmission/reception point, sTRP), or may perform data transmission with a multi-transmission/reception point (multi-transmission/reception point, mTRP). The plurality of antenna panels in the terminal device may be used for simultaneous transmitting in a single-channel multi-antenna panel manner, and may also be used for simultaneous transmitting in a multi-channel multi-antenna panel manner. In addition, the plurality of antenna panels may be further used in application scenarios such as transmit diversity and spatial multiplexing.

Transmitting/Receiving of a single antenna panel is easy to implement in the terminal device, power consumption and heat dissipation are low, and antenna panel management is simple. However, activation time and switching time need to be reserved for corresponding panels, to implement switching between antenna panels. Consequently, system efficiency is reduced. Simultaneous transmitting/receiving of a plurality of antenna panels can improve both robustness of a system and system efficiency, but is complex to implement in the terminal device, and power consumption and heat dissipation are high.

How to properly schedule the plurality of antenna panels in the terminal device by the base station, improve utilization of the plurality of antenna panels, and improve system efficiency when a constraint condition such as power consumption control is met is worth considering.

A power headroom (power headroom, PH) is a difference between a maximum transmission power allowed by the terminal and a currently estimated transmission power of a physical uplink shared channel (physical uplink shared channel, PUSCH), and indicates how much transmission power the terminal can use other than the transmission power currently used for transmission of the PUSCH.

The PH is in a unit of dB, and has a value range of [-23, 40] dB. If the PH is of a negative value, it indicates that the network device schedules, for the terminal device, a data transmission rate higher than a data transmission rate that can be supported by a current available transmit power of the terminal device. One of purposes for defining the PH is that the PH may be used as a reference basis for the network device to allocate an uplink resource, and may also provide a basis for uplink power control. Specifically, how the network device uses the PH value reported by the terminal depends on an algorithm design of the network device. For example, if the PH is of a positive value, more resources are subsequently allocated to the terminal for transmission. If the PH is of a negative value, fewer resources are allocated to the terminal for transmission during next scheduling. Because the "estimated transmission power of the PUSCH" is obtained through calculation based on an actual channel instead of an actual transmit power, and is not limited by a maximum transmit power, the PH is of a negative value.

A power headroom report (power headroom report, PHR) is a process in which the terminal device reports the power headroom to a network side. The process may be specifically classified into reporting triggering, PH calculation, and reporting. Different types of PHRs may be used for different channels. For example, a type 1 PHR (type 1 PHR) may be mainly used for a PUSCH channel, a type 2 PHR (type 2 PHR) may be mainly used for a PUSCH or a physical uplink control channel (physical uplink control channel, PUCCH) in a multi-connectivity (multi-radio dual connection, MRDC) scenario, and a type 3 PHR may be mainly used for a sounding reference signal (sounding reference signal, SRS).

In embodiments of this application, a usage scope, a usage object, and the like of the PH and the PHR are extended. The foregoing descriptions of the PH and the PHR are merely some conceptual descriptions, and should not be construed as a limitation on this application.

A PHR reporting trigger manner may be classified into periodic reporting and event-based reporting, which are also referred to as time-based triggering and event-based triggering. Details are described below. The PHR reporting trigger manner provided in embodiments of this application is applicable to both the terminal device and the antenna panel in the terminal device.

Trigger manner 1

When UE has uplink resources for transmitting new data, prohibitPHR-Timer (prohibitPHR-Timer) expires or has expired, and a path loss has changed more than a downlink path loss change (downlink path loss change, dl-PathlossChange) dB since a last transmission of a power headroom report. The path loss change value is estimated based on comparison between a path loss calculated at current time and a path loss at a moment when the PHR is reported last time. A path loss change in a time period from the last time to the current time is not considered.

It should be noted that, the "change value" of the path loss is used herein, that is, whether the current path loss increases or decreases is not distinguished, and an absolute difference of path losses is considered. In addition, if the timer prohibitPHR-Timer is still running, the PHR cannot be triggered regardless of the path loss change. prohibitPHR-Timer is used to prevent the UE from frequently sending PHRs due to frequent path loss changes or a low path loss threshold.

Trigger manner 2

periodicPHR-Timer (periodicPHR-Timer) expires.

Trigger manner 3

A PHR function or parameter (for example, a value of the timer is reconfigured by an RRC layer) is configured or reconfigured by the radio resource control (radio resource control, RRC) layer, and such configuration or reconfiguration is not used to disable the PHR.

Trigger manner 4

A secondary cell (secondary cell, SCell) is activated, and a first active downlink bandwidth part identifier (first active downlink bandwidth part identifier, firstActiveDownlinkBWP-Id) is not set to a dormant (dormant) BWP.

Trigger manner 5

A primary secondary cell (primary secondary cell, PSCell) is added.

Trigger manner 6

When the terminal device has uplink resources for transmitting new data, the timer prohibitPHR-Timer expires or has expired, there are uplink resources allocated for transmission or there is a PUCCH transmission, and a maximum allowed UE output power reduction for a serving cell c (maximum allowed UE output power reduction for serving cell c, P-MPRc) has changed more than phr-Tx-PowerFactorChange since the last transmission of a PHR.

Trigger manner 7

An activated BWP is switched from a dormant BWP to a non-dormant downlink bandwidth part (non-dormant downlink bandwidth part, non-dormant DL BWP).

Trigger manner 8

If maximum permissible exposure reporting frequency range 2 (maximum permissible exposure reporting frequency range 2, mpe-Reporting-FR2) is configured, and a maximum permissible exposure prohibit timer (maximum permissible exposure prohibit timer, mpe-ProhibitTimer) is not running: the measured P-MPR is greater than or equal to a maximum permissible exposure threshold (mpe-Threshold) since the last transmission of a PHR; or the measured P-PMR has changed more than phr-Tx-PowerFactorChange since transmission of a PHR due to the P-MPR reported last time being greater than or equal to mpe-Threshold.

For more detailed descriptions of the foregoing PHR reporting trigger manner, refer to a related standard and protocol.

In an actual use process, the PHR may be classified into an actual power headroom report (actual PHR) and a virtual power headroom report (virtual PHR). It is usually considered that, at a specific moment, if it can be determined that an actual target channel or target signal (for example, a type 1 PHR PUSCH (type 1 PHR PUSCH) or a type 3 PHR SRS (type 3 PHR SRS)) is sent at a moment when the PHR is reported, the actual PHR is used for calculation. If no actual target channel or target signal is sent, the virtual PHR is used for calculation.

The foregoing specific moment may be a moment of receiving downlink control information (downlink control information, DCI) scheduled by an initial uplink PUSCH for the first time when the PHR is transmitted on a dynamic scheduled PUSCH; or a moment before a time period before a start transmission moment of an initial uplink PUSCH (that can carry the current PHR) that is available for the first time; or a moment before PUSCH preparation time ($T_{proc}$ time) before an actual PUSCH transmission when the PHR is transmission on a semi-statically configured PUSCH.

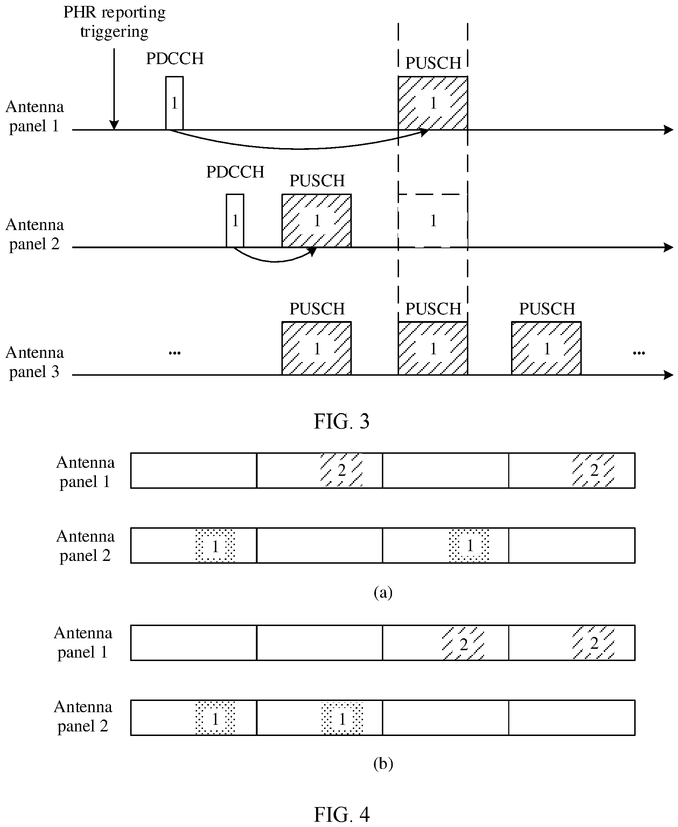

The following specifically describes, with reference to FIG. 3 to FIG. 7, a method for determining an actual PHR and a virtual PHR provided in embodiments of this application.

As shown in FIG. 3, when a PHR of a multi-antenna panel is transmitted on a PUSCH of an antenna panel 1, the antenna panel 1 calculates the PHR. At a PDCCH moment or a moment before a time period before a PUSCH transmission moment, it may be determined that there is semi-static PUSCH transmission (RRC configuration) in an antenna panel 3 at the PUSCH transmission moment in the antenna panel 1. Therefore, the antenna panel 1 calculates the actual PHR. For an antenna panel 2, it is determined that there is no actual PUSCH transmission in the antenna panel 2 at the PDCCH moment or the moment before the time period before the PUSCH transmission moment in the antenna panel 1. Therefore, the antenna panel 2 calculates the virtual PHR. Similarly, the antenna panel 3 calculates the actual PHR.

Alternatively, the antenna panel 1, the antenna panel 2, and the antenna panel 3 in FIG. 3 may be respectively replaced with a component carrier (component carrier, CC) 1, a CC 2, and a CC 3. In this case, when a PHR of a multi-CC is transmitted on the PUSCH of the CC 1, the CC 1 calculates the PHR. At the PDCCH moment or the moment before the time period before the PUSCH transmission moment, it may be determined that there is semi-static PUSCH (config grant PUSCH) transmission (RRC configuration) in the CC 3 at the PUSCH transmission moment in the CC 1. Therefore, the CC 1 calculates the actual PHR. For the CC 2, it is determined that there is no actual PUSCH transmission in the CC 2 at the PDCCH moment or the moment before the time period before the PUSCH transmission moment in the CC 1. Therefore, the CC 2 calculates the virtual PHR. Similarly, the CC 3 calculates the actual PHR.

FIG. 4 shows a PHR reporting manner by using a plurality of antenna panels according to an embodiment of this application. The terminal device may perform repeated sending by using different antenna panels, and repetition modes include a cyclic repetition (for example, (a) in FIG. 4) and a sequential repetition (for example, (b) in FIG. 4). The cyclic repetition may mean that the two antenna panels sequentially send two PHRs, and sending is repeated according to a sequential sending rule. The sequential repetition may mean that the two PHRs are sent based on an order, that is, a first PHR is repeatedly sent, and then a second PHR is repeatedly sent; or two antenna panels send PHRs based on an order, that is, the antenna panel 1 (which is also referred to as a first antenna panel) repeatedly send PHRs, and then the antenna panel 2 (which is also referred to as a second antenna panel) repeatedly send PHRs.

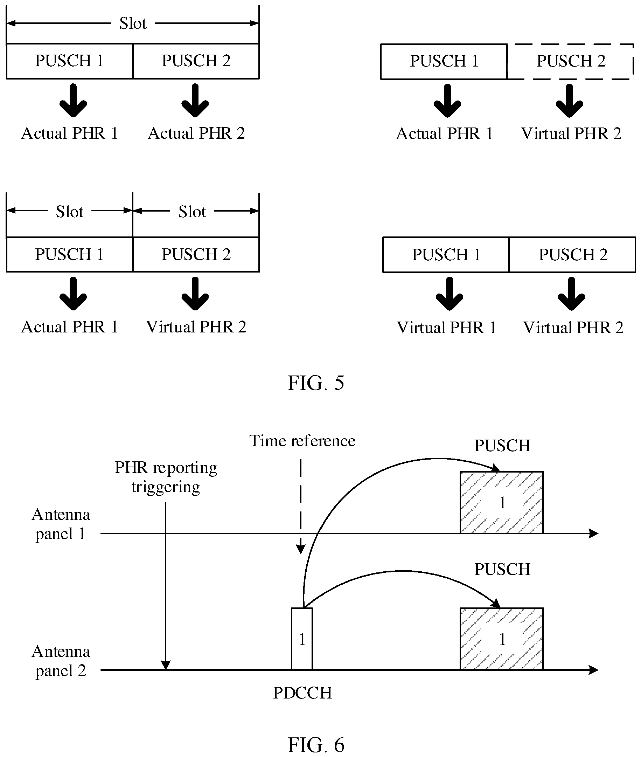

FIG. 5 shows possible types of two PHRs when the terminal device simultaneously reports the two PHRs by using two antenna panels.

A type of the PHR sent by using the antenna panel 1 may be determined based on the foregoing method (for detailed content, refer to the related standard). When the PHR sent by using the antenna panel 1 is an actual PHR, and the PUSCH corresponding to the antenna panel 2 and the PUSCH corresponding to the antenna panel 1 are in a same slot, the PHR sent by using the antenna panel 2 is an actual PHR. In another case, for example, when the PHR sent by using the antenna panel 1 is a virtual PHR, or the PUSCH corresponding to the antenna panel 2 and the PUSCH corresponding to the antenna panel 1 are not in a same slot, the PHR sent by using the antenna panel 2 is a virtual PHR.

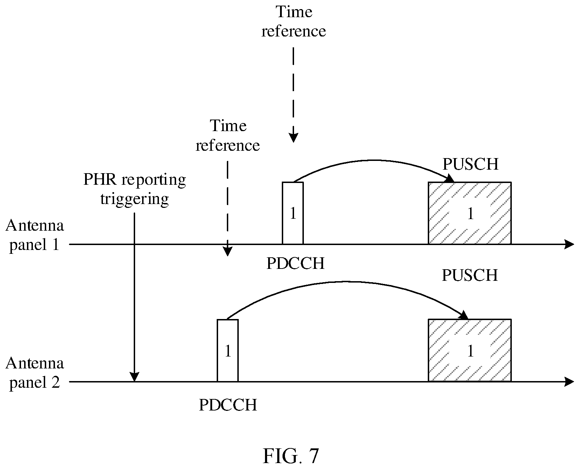

With reference to FIG. 6 and FIG. 7, the following uses an example to describe a method for determining a type of a PHR in an antenna panel-based PHR reporting process provided in this application.

As shown in FIG. 6, when a PHR is transmitted on a single channel, if two antenna panels are antenna panels for simultaneous transmitting (for example, the two antenna panels simultaneously send PHRs), and a difference between path losses (path losses) of the two antenna panels in information transmission is less than or equal to a first threshold, one PHR may be reported, where the PHR may be a PHR of the antenna panel 1 or a PHR of the antenna panel 2. If the difference between the path losses of the two antenna panels in information transmission is greater than the first threshold, two PHRs may be reported: the PHR of the antenna panel 1 and the PHR of the antenna panel 2.

Simultaneous transmitting or simultaneous receiving of the antenna panels may be understood as simultaneous transmitting or simultaneous receiving of a plurality of antenna panels, or that the terminal device has a capability of simultaneous transmitting or simultaneous receiving by a plurality of antenna panels. It may also be understood that data or reference signals are simultaneously transmitted or received by using a plurality of antenna panels, or the terminal device simultaneously performs measurement by using a plurality of antenna panels.

Alternatively, the terminal device may determine, based on a triggered object of a PHR reporting event, to report one or two PHRs. Specifically, if a PHR reporting trigger event triggers reporting of the antenna panel, two PHRs may be reported. The two PHRs may be the PHR of the antenna panel 1 and the PHR of the antenna panel 2. If the PHR reporting trigger event triggers reporting of the terminal device, one PHR may be reported, where the PHR may be a PHR of the terminal device.

In an embodiment, when two PHRs are transmitted on a single channel, if two antenna panels corresponding to the two PHRs are two antenna panels for simultaneous transmitting, the two PHRs are of a same type, that is, both are actual PHRs or both are virtual PHRs. Specifically, whether the two PHRs are actual PHRs or virtual PHRs may be determined based on related content in the embodiment shown in FIG. 3.

As shown in FIG. 7, when a PHR is transmitted on a plurality of channels, a type of the reported PHR may be determined in the following manner.

The terminal device may determine a quantity and types of reported PHRs based on a triggered object of a PHR reporting event.

For example, if the PHR reporting event triggers reporting of the terminal device, the quantity and types of reported PHRs may be determined based on related content in the embodiment shown in FIG. 3.

Alternatively, the terminal device may determine the quantity and types of reported PHRs based on the triggered object of the PHR reporting event and the reporting manner.

For example, if the PHR reporting event triggers reporting of one of two antenna panels, and the two antenna panels perform joint reporting, the two antenna panels each report two PHRs. A PHR corresponding to a triggered antenna panel is an actual PHR, and a PHR corresponding to an antenna panel that is not triggered is a virtual PHR.

If the PHR reporting event triggers reporting of the two antenna panels, and the two antenna panels perform joint reporting, the two antenna panels each report two actual PHRs.

Similarly, for example, if the PHR reporting event triggers reporting of one of the two antenna panels, and the two antenna panels perform separate reporting, the triggered antenna panel reports an actual PHR corresponding to the antenna panel, and the other antenna panel that is not triggered does not perform reporting.

If the PHR reporting event triggers reporting of the two antenna panels, and the two antenna panels perform separate reporting, the two antenna panels each report one actual PHR, that is, the antenna panel 1 reports the PHR corresponding to the antenna panel 1, and the antenna panel 2 reports the PHR corresponding to the antenna panel 2.

A formula for calculating an actual PH of the type 1 PHR is as follows:

$$PH_{type1,b,f,c}(i,j,q,l) = P_{\text{CMAX},f,c}(i) - \left\{ \begin{array}{l} P_{\text{O\_PUSCH},b,f,c}(i) + 10\log_{10}(2^{\mu} \cdot M_{\text{RB},b,f,c}^{PUSCH}(i)) \\ + \alpha_{b,f,c}(j) \cdot PL_{b,f,c}(q_d) + \Delta_{\text{TF},b,f,c}(i) + f_{b,f,c}(i,l) \end{array} \right\},$$

where

$PH_{type1,b,f,c}(i,j,q,l)$ indicates a calculated value of the actual PH, $P_{\text{CMAX},f,c}(i)$ indicates a maximum transmit power of an

$$\left\{ \begin{array}{l} P_{\text{O\_PUSCH},b,f,c}(i) + 10\log_{10}(2^{\mu} \cdot M_{\text{RB},b,f,c}^{PUSCH}(i)) \\ + \alpha_{b,f,c}(j) \cdot PL_{b,f,c}(q_d) + \Delta_{\text{TF},b,f,c}(i) + f_{b,f,c}(i,l) \end{array} \right\}$$

antenna panel, and indicates a calculated power of the antenna panel.

The calculated power of the antenna panel may also be referred to as a transmit power associated with the antenna panel. For a terminal device including a plurality of antenna panels, the calculated power of the antenna panel is related to a maximum transmit power of the terminal device.

$P_{\text{O\_PUSCH},b,f,c}(i)$ may be determined based on an access manner of the terminal device and a PUSCH transmission configuration manner, $10\log_{10}(2^{\mu} \cdot M_{\text{RB},b,f,c}^{PUSCH}(i))$ indicates a value of a bandwidth of a PUSCH resource, $\alpha_{b,f,c}(j) \cdot PL_{b,f,c}(q_d)$ indicates a value of a downlink path loss, $\Delta_{\text{TF},b,f,c}(i)$ indicates a value of an uplink bandwidth part of a carrier and a modulation and coding scheme of a serving cell, and $f_{b,f,c}(i,l)$ indicates a value of a PUSCH power control adjustment state.

The parameters in the foregoing formula may be calculated based on a power control parameter for actually sending the PUSCH. For content such as detailed meanings of the parameters, refer to a related standard.

A formula for calculating a virtual PH of the type 1 PHR is as follows:

$$PH_{type1,b,f,c}(i,j,q,l) = \tilde{P}_{\text{CMAX},f,c}(i) - \left\{ P_{\text{O\_PUSCH},b,f,c}(j) + \alpha_{b,f,c}(j) \cdot PL_{b,f,c}(q_d) + f_{b,f,c}(i,l) \right\},$$

where

$PH_{type1,b,f,c}(i,j,q,l)$ indicates a calculated value of the virtual PH, $\tilde{P}_{\text{CMAX},f,c}(i)$ indicates a maximum transmit power of an antenna panel, and $\{P_{\text{O\_PUSCH},b,f,c}(j) + \alpha_{b,f,c}(j) \cdot PL_{b,f,c}(q_d) + f_{b,f,c}(i,l)\}$ indicates a calculated power of the antenna panel.

The calculated power of the antenna panel may also be referred to as a transmit power associated with the antenna panel. For a terminal device including a plurality of antenna panels, the calculated power of the antenna panel is related to a maximum transmit power of the terminal device.

$P_{\text{O\_PUSCH},b,f,c}(j)$ may be determined based on an access manner of the terminal device and a PUSCH transmission configuration manner, $\alpha_{b,f,c}(j) \cdot PL_{b,f,c}(q_d)$ indicates a value of a downlink path loss, and $f_{b,f,c}(i,l)$ indicates a value of a PUSCH power control adjustment state.

The parameters in the foregoing formula may be calculated based on a predefined value. For detailed content, refer to a related standard.

A formula for calculating an actual PH of the type 3 PHR is as follows:

$$PH_{type3,b,f,c}(i,q_s) = P_{\text{CMAX},f,c}(i) - \left\{ \begin{array}{l} P_{\text{O\_SRS},b,f,c}(q_s) + 10\log_{10}(2^{\mu} \cdot M_{\text{SRS},b,f,c}(i)) \\ + \alpha_{\text{SRS},f,c}(q_s) \cdot PL_{b,f,c}(q_d) + h_{b,f,c}(i) \end{array} \right\},$$

where

$PH_{type3,b,f,c}(i,q_s)$ indicates a calculated value of the actual PH, $P_{CMAX,f,c}(i)$ indicates a maximum transmit power of an

$$\left\{ \begin{array}{l} P_{O\_SRS,b,f,c}(q_s) + 10\log_{10}(2^\mu \cdot M_{SRS,b,f,c}(i)) \\ + \alpha_{SRS,f,c}(q_s) \cdot PL_{b,f,c}(q_d) + h_{b,f,c}(i) \end{array} \right\}$$

antenna panel, and indicates a calculated power of the antenna panel.

The calculated power of the antenna panel may also be referred to as a transmit power associated with the antenna panel. For a terminal device including a plurality of antenna panels, the calculated power of the antenna panel is related to a maximum transmit power of the terminal device.

$P_{O\_SRS,b,f,c}(q_s)$ indicates a value related to an active uplink bandwidth part, $10\log_{10}(2^\mu \cdot M_{SRS,b,f,c}(i))$ indicates a value of a bandwidth of an SRS, $\alpha_{SRS,f,c}(q_s) \cdot PL_{b,f,c}(q_d)$ indicates a value of a downlink path loss, and $h_{b,f,c}(i)$ indicates a value of a transmission power control instruction value.

The parameters in the foregoing formula may be calculated based on a power control parameter for actually sending the SRS. For content such as detailed meanings of the parameters, refer to a related standard.

A formula for calculating a virtual PH of the type 3 PHR is as follows:

$$PH_{type3,b,f,c}(i,q_s) = \tilde{P}_{CMAX,f,c}(i) - \left\{ P_{O\_SRS,b,f,c}(q_s) + \alpha_{SRS,f,c}(q_s) \cdot PL_{b,f,c}(q_d) + h_{b,f,c}(i) \right\},$$

where

$PH_{type3,b,f,c}(i,q_s)$ indicates a calculated value of the virtual PH, $\tilde{P}_{CMAX,f,c}(i)$ indicates a maximum transmit power of an antenna panel, and $\{P_{O\_SRS,b,f,c}(q_s) + \alpha_{SRS,f,c}(q_s) \cdot PL_{b,f,c}(q_d) + h_{b,f,c}(i)\}$ indicates a calculated power of the antenna panel.

The calculated power of the antenna panel may also be referred to as a transmit power associated with the antenna panel. For a terminal device including a plurality of antenna panels, the calculated power of the antenna panel is related to a maximum transmit power of the terminal device.

$P_{O\_SRS,b,f,c}(q_s)$ indicates a value related to an active uplink bandwidth part, $\alpha_{SRS,f,c,s}(q_s) \cdot PL_{b,f,c}(q_d)$ indicates a value of a downlink path loss, and $h_{b,f,c}(i)$ indicates a value of a transmission power control instruction value.

The parameters in the foregoing formula may be calculated based on a predefined value. For content such as detailed meanings of the parameters, refer to a related standard.

A terminal device including two antenna panels is used as an example. A power headroom of the terminal device may be calculated according to the following formula:

$$PH = P_{UE\max} - (P_1 + P_2),$$

where

$PH$ indicates a value of an actual PH or a value of a virtual PH of the terminal device, and $P_{UE\max}$ indicates a maximum transmit power of the terminal device. When $PH$ indicates the value of the actual PH, $P_1$ and $P_2$ indicate an actual calculated power of the first antenna panel and an actual calculated power of the second antenna panel. When $PH$ indicates the value of the virtual PH, $P_1$ and $P_2$ indicate a virtual calculated power of the first antenna panel and a virtual calculated power of the second antenna panel.

In the antenna panel-based PHR reporting process, a transmit power of each antenna panel is related to information such as a maximum transmit power of the antenna panel and the maximum transmit power of the terminal device.

The maximum transmit power of the antenna panel or the maximum transmit power of the terminal device may be determined based on configuration information, or may be obtained through calculation based on a related parameter, and may be a maximum power (for example, a maximum transmit power used for PHR calculation) of the antenna panel or the terminal device for performing a specific action, or may be a total power of the antenna panel or the terminal device.

It should be noted that antenna panel-based PHR reporting may be PHR reporting implemented based on any information corresponding to an antenna panel, for example, based on a candidate value (candidate value), a candidate value set (candidate value set), a panel identifier (panel identifier, panel ID), an SRS resource (SRS resource), or an SRS resource set (resource set).

In some embodiments, the terminal device may include a plurality of antenna panels. The antenna panels include at least a first antenna panel and a second antenna panel. The terminal device may send a channel and/or a signal by using the first antenna panel and/or the second antenna panel. A transmit power of the first panel is a first transmit power, and a transmit power of the second antenna panel is a second transmit power.

The first transmit power is determined based on a calculated power of the first antenna panel and one or more of the following:

the maximum transmit power of the terminal device, a maximum transmit power of the first panel, or a maximum transmit power of the second antenna panel.

The second transmit power is determined based on a calculated power of the second antenna panel and one or more of the following:

the maximum transmit power of the terminal device, the maximum transmit power of the first panel, or the maximum transmit power of the second antenna panel.

The channel or the signal may be a PUSCH, a PUCCH, a preamble (preamble), an SRS, or the like.

That the channel is sent by using the antenna panel may also be understood as that content of the channel is sent by using the antenna panel, that is, a signal of the channel is sent by using the antenna panel.

In some embodiments, if a sum of the calculated power of the first antenna panel and the calculated power of the second antenna panel is less than or equal to the maximum transmit power of the terminal device, the first transmit power is the first calculated power, and the second transmit power is the second calculated power.

The calculated power may be a value obtained through calculation based on a plurality of parameters according to the foregoing formula.

The terminal device may determine an actual transmit power of each antenna panel based on the maximum transmit power of the terminal device. For example, the terminal device may obtain the maximum transmit power $P_{cmax}$ of the terminal device, and calculate the calculated power $P_1$ of the first antenna panel and the calculated power $P_2$ of the second antenna panel according to the foregoing formula. If a sum of $P_1$ and $P_2$ is less than or equal to $P_{cmax}$, that is, the sum of the calculated power of the first antenna panel and the calculated power of the second antenna panel does not exceed the maximum transmit power of the terminal device, the first antenna panel and the second antenna panel may perform transmission based on the calculated powers, that is, the actual transmit power of the first antenna panel is the calculated power $P_1$, and the actual transmit power of the second antenna panel is the calculated power $P_2$.

In some other embodiments, if a sum of the calculated power of the first antenna panel and the calculated power of the second antenna panel is greater than the maximum transmit power of the terminal device, a sum of the first transmit power and the second transmit power is equal to the maximum transmit power of the terminal device.

When a sum of calculated powers of all antenna panels in the terminal device is greater than the maximum transmit power of the terminal device, the terminal device may send a channel or a signal by using the antenna panels at a full power.

For example, the terminal device may obtain the maximum transmit power $P_{cmax}$ of the terminal device, and calculate the calculated power $P_1$ of the first antenna panel and the calculated power $P_2$ of the second antenna panel according to the foregoing formula. If a sum of $P_1$ and $P_2$ is greater than $P_{cmax}$, a sum of the actual transmit power $P_{1a}$ of the first antenna panel and the actual transmit power $P_{2a}$ of the second antenna panel may be $P_{cmax}$.

For example, the first transmit power is directly proportional to the first calculated power, and the second transmit power is directly proportional to the second calculated power.

For example, $P_{1a}$ is 0.8 times $P_1$, $P_{2a}$ is 0.7 times $P_2$, and a sum of 0.8 times $P_1$ and 0.7 times $P_2$ is $P_{cmax}$.

For another example, a ratio of the first transmit power to the second transmit power is equal to a ratio of the first calculated power to the second calculated power. In other words, $P_1:P_2=P_{1a}:P_{2a}$, and $P_{1a}+P_{2a}=P_{cmax}$.

For another example, the first transmit power is directly proportional to the maximum transmit power of the terminal device, and the second transmit power is directly proportional to the maximum transmit power of the terminal device.

For example, $P_{1a}$ may be 0.5 times $P_{cmax}$, and $P_{2a}$ may be 0.5 times $P_{cmax}$; or $P_{1a}$ may be 0.6 times $P_{cmax}$, and $P_{2a}$ may be 0.4 times $P_{cmax}$.

For another example, the first transmit power is the first calculated power or the maximum transmit power of the terminal device, or the second transmit power is the second calculated power or the maximum transmit power of the terminal device.

For example, $P_{1a}$ may be $P_1$, and $P_{2a}$ may be $P_{cmax}$-$P_1$. Alternatively, $P_{1a}$ is $P_{cmax}$, and $P_{2a}$ is 0.

For another example, $P_{2a}$ may be $P_2$, and $P_{1a}$ may be $P_{cmax}$-$P_2$. Alternatively, $P_{2a}$ is $P_{cmax}$, and $P_{1a}$ is 0.

In some other embodiments, if a sum of the calculated power of the first antenna panel and the calculated power of the second antenna panel is greater than the maximum transmit power of the terminal device, a sum of the first transmit power and the second transmit power is less than the maximum transmit power of the terminal device.

When a sum of calculated powers of all antenna panels in the terminal device is greater than the maximum transmit power of the terminal device, the terminal device may send a channel or a signal by using the antenna panels at a non-full power.

For example, the terminal device may obtain the maximum transmit power $P_{cmax}$ of the terminal device, and calculate the calculated power $P_1$ of the first antenna panel and the calculated power $P_2$ of the second antenna panel according to the foregoing formula. If a sum of $P_1$ and $P_2$ is greater than $P_{cmax}$, a sum of the actual transmit power $P_{1a}$ of the first antenna panel and the actual transmit power $P_{2a}$ of the second antenna panel may be less than $P_{cmax}$.

**EP 4 557 842 A1**

For example, the first transmit power is directly proportional to the first calculated power, and the second transmit power is directly proportional to the second calculated power.

For example, $P_{1a}$ is 0.6 times $P_1$, $P_{2a}$ is 0.4 times $P_2$, and a sum of 0.6 times $P_1$ and 0.4 times $P_2$ is less than $P_{cmax}$. Alternatively, $P_{1a}$ is 0.9 times $P_1$, and $P_{2a}$ is 0.

For another example, the first transmit power is directly proportional to the maximum transmit power of the terminal device, and the second transmit power is directly proportional to the maximum transmit power of the terminal device.

For example, $P_{1a}$ may be 0.4 times $P_{cmax}$, and $P_{2a}$ may be 0.4 times $P_{cmax}$; or $P_{1a}$ may be 0.6 times $P_{cmax}$, and $P_{2a}$ may be 0.1 times $P_{cmax}$. Alternatively, $P_{1a}$ may be 0, and $P_{2a}$ may be 0.7 times $P_{cmax}$.

Optionally, neither the first transmit power nor the second transmit power is 0.

The terminal device may simultaneously transmit data by using the two antenna panels, to help reduce a vacancy rate of antenna panels and improve actual utilization of the plurality of antenna panels.

In still another embodiment, the first transmit power is the first calculated power, and the second transmit power is greater than or equal to 0; or the second transmit power is the second calculated power, and the first transmit power is greater than or equal to 0.

For example, $P_{1a}$ may be $P_1$, and $P_{2a}$ may range from 0 to $P_{cmax}-P_{1a}$.

For another example, $P_{2a}$ may be $P_2$, and $P_{1a}$ may range from 0 to $P_{cmax}-P_{2a}$.

After the actual transmit power of the first antenna panel and the actual transmit power of the second antenna panel are determined based on the relationship that the sum of the actual transmit power of the first antenna panel and the actual transmit power of the second antenna panel is less than the maximum transmit power of the terminal device, it may be further determined, based on the maximum transmit power of the first antenna panel and the maximum transmit power of the second antenna panel, that the actual transmit power of the first antenna panel is less than or equal to the maximum transmit power of the first antenna panel, and the actual transmit power of the second antenna panel is less than or equal to the actual transmit power of the second antenna panel.

For example, when it is determined, based on the maximum transmit power $P_{cmax}$ of the terminal device, that the actual transmit power of the first antenna panel is $P_{1a}$ and the actual transmit power of the second antenna panel is $P_{2a}$, if the maximum transmit power of the first antenna panel is $P_{1max}$, the maximum transmit power of the second antenna panel is $P_{2max}$.

When $P_{1max}$ is greater than or equal to $P_{1a}$, the first antenna panel may perform data transmission based on $P_{1a}$. When $P_{1max}$ is less than $P_{1a}$, the first antenna panel may transmit data at a power not greater than $P_{1max}$.

Similarly, when $P_{2max}$ is greater than or equal to $P_{2a}$, the first antenna panel may transmit data based on $P_{2a}$. When $P_{2max}$ is less than $P_{2a}$, the first antenna panel may transmit data at a power not greater than $P_{2max}$.

Optionally, when the first antenna panel and the second antenna panel correspond to different channels, the first transmit power and the second transmit power are further determined based on one or more of the following information: a channel priority, channel content, or a channel periodicity.

Because there is a correspondence between an antenna panel and a channel, when the plurality of antenna panels in the terminal device transmit data, an order or a priority of allocating powers to the plurality of antenna panels may be determined based on factors such as a priority of a channel corresponding to an antenna panel, channel content, and a channel periodicity.

For example, the first antenna panel corresponds to a PUCCH, and the second antenna panel corresponds to a PUSCH. It is assumed that a priority of the PUCCH is higher than that of the PUSCH, the terminal device may preferentially allocate a transmission power to the first antenna panel. For example, the actual transmit power of the first antenna panel is set to 0.8 times $P_{cmax}$, and the actual transmit power of the second antenna panel is set to 0.1 times $P_{cmax}$.

Similarly, for example, a channel transmitted by using the first antenna panel is an aperiodic channel, and a channel transmitted by using the second antenna panel is a semi-persistent channel or a periodic channel. It is assumed that a priority of the aperiodic channel is higher than priorities of the semi-persistent channel and the periodic channel, the terminal device may preferentially allocate a transmission power to the first antenna panel. For example, the actual transmit power of the first antenna panel is set to $P_{cmax}$, and the actual transmit power of the second antenna panel is set to 0.

Similarly, for example, channel content transmitted by using the first antenna panel is a hybrid automatic repeat request-acknowledgment (hybrid automatic repeat request-acknowledgment, HARQ-ACK) or an uplink scheduling request (scheduling request, SR), and channel content transmitted by using the second antenna panel is CSI. It is assumed that priorities of the HARQ and the SR are higher than a priority of the CSI, the terminal device may preferentially allocate a transmission power to the first antenna panel. For example, the actual transmit power of the first antenna panel is set to 0.7 times $P_{cmax}$, and the actual transmit power of the second antenna panel is set to 0.3 times $P_{cmax}$.

Similarly, for example, channel content transmitted by using the first antenna panel is a DG, and channel content transmitted by using the second antenna panel is a CG. It is assumed that a priority of the DG is higher than that of the CG, the terminal device may preferentially allocate a transmission power to the first antenna panel. For example, the actual transmit power of the first antenna panel is set to 0.9 times $P_{cmax}$, and the actual transmit power of the second antenna panel is set to 0.1 times $P_{cmax}$.

In some embodiments, the terminal device may allocate a power to each of the plurality of antenna panels in the following priority order:

1. physical random access channel (physical random access channel, PRACH) transmission on a primary cell (primary cell, PCell);

2. transmitting one or more of the following information on PUCCH: hybrid automatic repeat request request-acknowledgment (hybrid automatic repeat request-acknowledgment, HARQ-ACK) information, an uplink scheduling request (SR), or an LRP; or PUSCH transmission with HARQ-ACK information;

3. PUCCH transmission with CSI or PUSCH transmission with CSI;

4. PUSCH transmission without HARQ-ACK information or CSI, and PUSCH transmission on the primary cell for a type 2 random access procedure; and

5. SRS transmission, with an aperiodic SRS having a higher priority than a semi-persistent and/or periodic SRS, or physical random access channel (PRACH) transmission on a serving cell other than the primary cell.

It should be noted that an order relationship between priorities of the different channels, content of the different channels, and periods of the different channels may be determined by the terminal device based on pre-configured information.

The PHR may be reported via a media access control control element (media access control control element, MAC-CE), and a reporting format of the PHR includes a single-CC format and a multi-CC format.

The terminal device may report a PHR of one antenna panel at a time, or may report PHRs of two antenna panels at a time, or the terminal device may report PHRs of more antenna panels at a time. The terminal device may report one or more PHRs by using one antenna panel, or the terminal device may jointly report or separately report a plurality of PHRs by using the plurality of antenna panels.

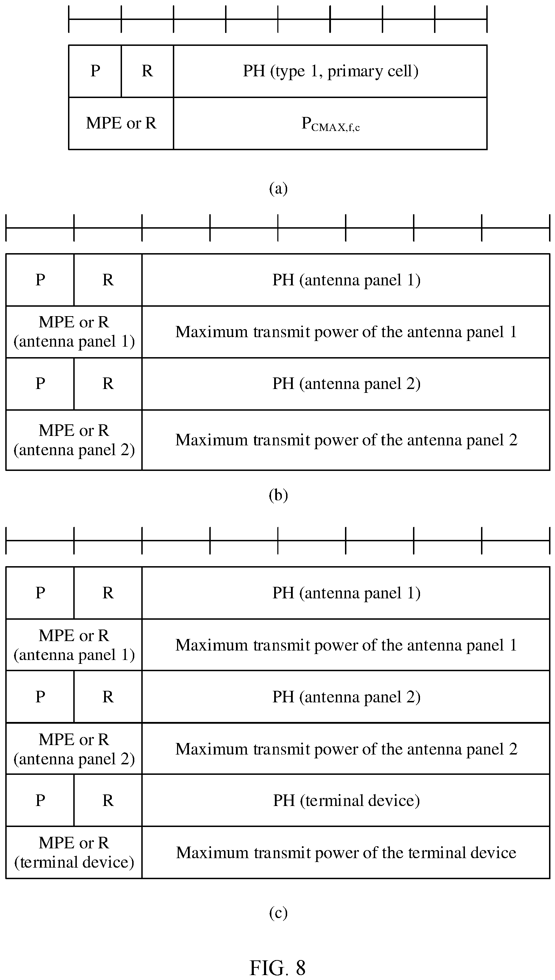

FIG. 8 shows a MAC-CE in a single CC format when a terminal device reports a PHR by using one antenna panel.

Each bit field is represented as follows:

R: This field is a reserved bit, and may be set to 0.

P: If an MPE reporting value is configured (that is, mpe-Reporting-FR2 is configured), and a P-MPR value meets a threshold and less than P-MPR_00, this field is set to 0 and to 1 otherwise. If an MPE reporting value is not configured (that is, mpe-Reporting-FR2 is not configured) or is configured on an FR1 frequency band, this field indicates power backoff caused by another reason. This field is set to 1 if corresponding $P_{CMAX\_f\_c}$ has a different value and no power backoff caused by another reason is applied.

PH: This field indicates a PH level, and has a length of 6 bits. The 6-bit field one-to-one corresponds to a PH level in a table. Table 1 shows a PH level and a bit code mapping table.

Table 1 PH level and bit code mapping table

| PH | Power headroom level |
|----|---------------------|
| 0 | POWER_HEADROOM_0 |
| 1 | POWER HEADROOM_1 |
| 2 | POWER HEADROOM_2 |
| 3 | POWER HEADROOM_3 |
| ... | ... |
| 60 | POWER_HEADROOM_60 |
| 61 | POWER_HEADROOM_61 |
| 62 | POWER_HEADROOM_62 |
| 63 | POWER_HEADROOM_63 |

$P_{CMAX,f,c}$: This field indicates the maximum transmit power of the terminal for calculating the PH. A mapping relationship between this field and the maximum transmit power that can be implemented is shown in Table 2.

Table 2 $P_{CMAX,f,c}$ levels and bit code mapping table

| $P_{CMAX,f,c}$ | Nominal UE transmit power level |
|---|---|
| 0 | PCMAX_C_00 |
| 1 | PCMAX_C_01 |
| 2 | PCMAX_C_02 |
| ... | ... |
| 61 | PCMAX_C_61 |
| 62 | PCMAX_C_62 |
| 63 | PCMAX_C_63 |

MPE: If an MPE reporting value is configured (that is, mpe-Reporting-FR2 is configured), the MPE value is reported. If an MPE reporting value is not configured (that is, mpe-Reporting-FR2 is not configured), or operates on an FR1 frequency band, or a P field is set to 0, this field is a reserved field. Details may be shown in Table 3.

Table 3 P-MPR level and bit code mapping table

| MPE | Measured P-MPR value |
|---|---|
| 0 | P-MPR_00 |
| 1 | P-MPR_01 |
| 2 | P-MPR_02 |
| 3 | P-MPR_03 |

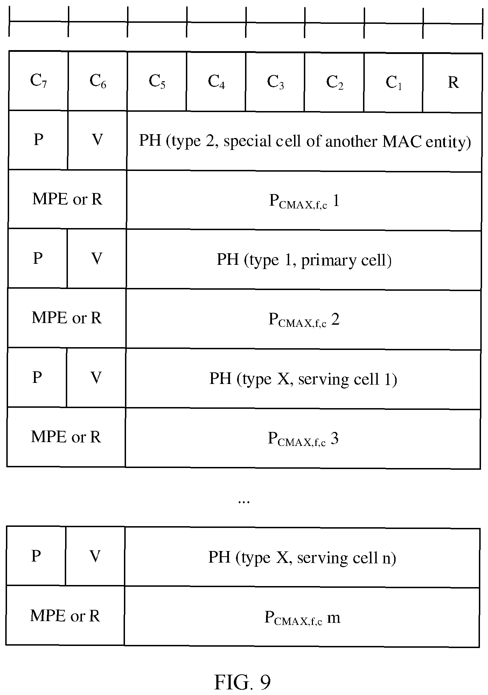

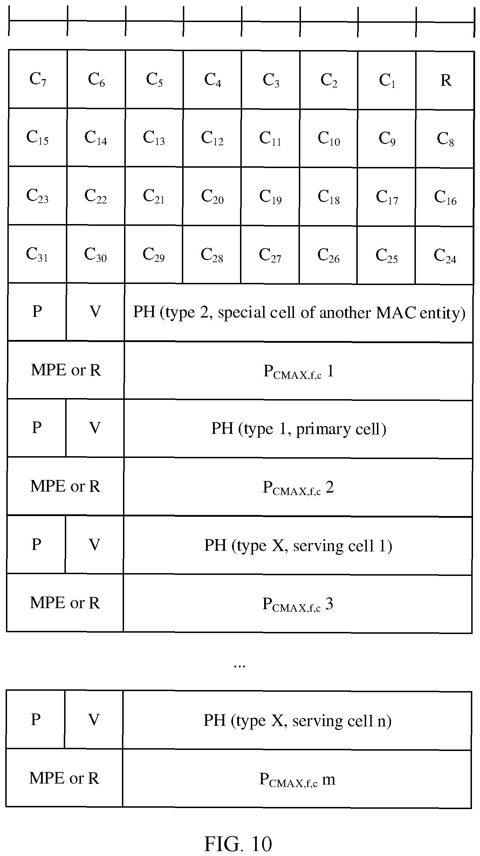

FIG. 9 and FIG. 10 show a MAC-CE in a multi-CC format when the terminal device reports a PHR by using one antenna panel. FIG. 9 shows a configured reporting format of a multi-CC PHR MAC-CE with an index of a serving cell that is less than 8, and FIG. 10 shows a configured reporting format of a multi-CC PHR MAC-CE with an index of a serving cell that is greater than or equal to 8.

Each bit field is represented as follows:

R: This field is a reserved bit, and is set to 0.

$C_i$: This field indicates whether to report a PH value for the serving cell whose index is i, where 1 indicates that the PH value is reported, and 0 indicates that the PH value is not reported.

V: This field indicates whether a value of the reported PHR is a value of an actual PH or a value of a virtual PH. For a type 1 PH and a type 3 PH, 0 indicates the value of the actual PH, and 1 indicates the value of the virtual PH. For a type 2 PH, 1 indicates the value of the actual PH, and 0 indicates the value of the virtual PH. In addition, this field also indicates whether the related $P_{CMAX\_f\_c}$ field and MPE field are present, 0 indicates that the $P_{CMAX\_f\_c}$ field and the MPE field are present, and 1 indicates that the $P_{CMAX\_f\_c}$ field and the MPE field are not present.

PH: This field indicates the reported PH value.

P: If an MPE reporting value is configured (that is, mpe-Reporting-FR2 is configured), and a P-MPR value meets a threshold and less than P-MPR_00, this field is set to 0 and to 1 otherwise. If an MPE reporting value is not configured (that is, mpe-Reporting-FR2 is not configured) or is configured on an FR1 frequency band, this field indicates power backoff caused by another reason. This field is set to 1 if corresponding $P_{CMAX\_f\_c}$ has a different value and no power backoff caused by another reason is applied.

$P_{CMAX\_f\_c}$: If present (the V field indicates 0), this field indicates a maximum transmit power for an NR terminal, or indicates a maximum transmit power for an E-UTRA (LTE) terminal.

MPE: If an MPE reporting value is configured (that is, mpe-Reporting-FR2 is configured), the MPE value is reported. If an MPE reporting value is not configured (that is, mpe-Reporting-FR2 is not configured), or operates on an FR1 frequency band, or a P field is set to 0, this field is a reserved field.

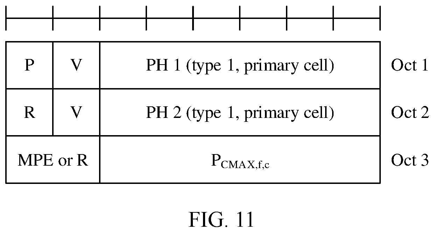

FIG. 11 shows a MAC-CE in a single CC format when the terminal device sends two PHRs by using two antenna panels.

Each bit field is represented as follows:

R: This field is a reserved bit, and may be set to 0.

PH i: This field indicates a power headroom level, where i indicates an index of an antenna panel. A length of the bit field is 6 bits. The 6-bit field one-to-one corresponds to a PH level in the table. Table 1 is a PH level table.

P: If an MPE reporting value is configured (that is, mpe-Reporting-FR2 is configured), and a P-MPR value meets a threshold and less than P-MPR_00, this field is set to 0 and to 1 otherwise. If an MPE reporting value is not configured (that is, mpe-Reporting-FR2 is not configured) or is configured on an FR1 frequency band, this field indicates whether power backoff caused by another reason is applied. This field is set to 1 if corresponding $P_{CMAX\_f\_c}$ has a different value and no power backoff caused by another reason is applied.

V: This field indicates if the PH value corresponding to the antenna panel is based on real transmission or a reference format. For the type 1 PH, the bit field set to 0 indicates real transmission on a PUSCH, and the bit field set to 1 indicates that a reference format is used on the PUSCH.

$P_{CMAXf\_c}$: This field indicates the maximum transmit power of the terminal for calculating the PH. A mapping relationship between this field and the maximum transmit power that can be implemented is shown in Table 2.

MPE: If an MPE reporting value is configured (that is, mpe-Reporting-FR2 is configured), the MPE value is reported. If an MPE reporting value is not configured (that is, mpe-Reporting-FR2 is not configured), or operates on an FR1 frequency band, or a P field is set to 0, this field is a reserved field. Details may be shown in Table 3.

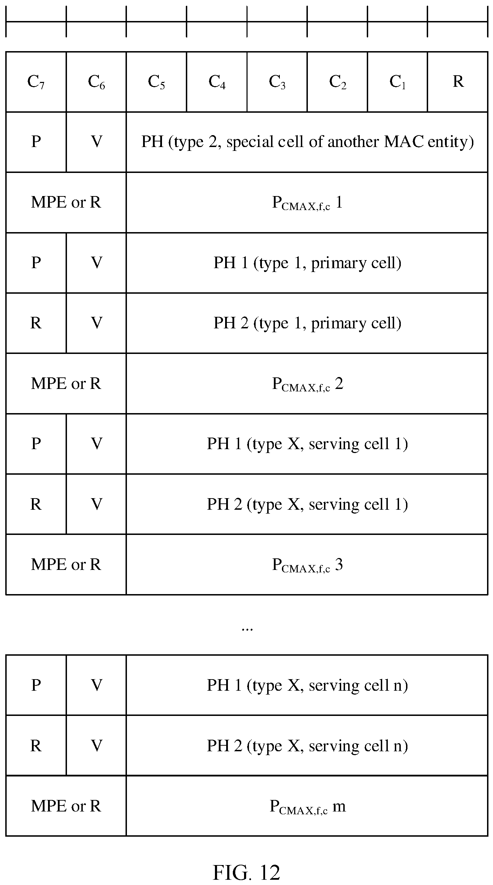

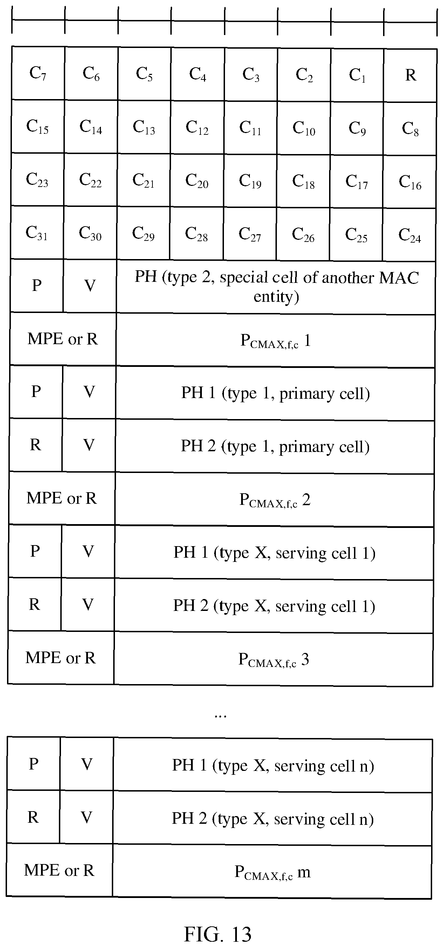

FIG. 12 and FIG. 13 show a MAC-CE in a multi-CC format when the terminal device sends, by using two antenna panels, two PHRs corresponding to the two antenna panels. FIG. 12 shows a configured reporting format of a multi-CC PHR MAC-CE with an index of a serving cell that is less than 8, and FIG. 13 shows a configured reporting format of a multi-CC PHR MAC-CE with an index of a serving cell that is greater than or equal to 8.

Each bit field is represented as follows:

$C_i$: This field indicates presence of a power headroom field for a serving cell, where i indicates an index of the serving cell. When the bit field set to 1, it indicates that a power headroom field for the serving cell whose index is i is reported. When the bit field set to 0, it indicates that a power headroom field for the serving cell whose index is i is not reported.

R: This field is a reserved bit, and may be set to 0.

V: This field indicates if the PH value corresponding to the antenna panel is based on real transmission or a reference format. For the type 1 PH, the bit field set to 0 indicates real transmission on a PUSCH, and the bit field set to 1 indicates that a reference format is used on the PUSCH. For the type 2 PH, the bit field set to 0 indicates real transmission on a PUCCH, and the bit field set to 1 indicates that a reference format is used on the PUCCH. For the type 3 PH, the bit field set to 0 indicates real transmission on an SRS, and the bit field set to 1 indicates that a reference format is used on the SRS. Further, for the type 1 PH, the type 2 PH, and the type 3 PH, the bit field set to 0 indicates presence of an octet including the associated $P_{CMAX\_f\_c}$ field and the MPE field, and the bit field set to 1 indicates that the octet including the associated $P_{CMAX\_f\_c}$ field and the MPE field is omitted.

PH i: This field indicates a power headroom level, where i indicates an index of an antenna panel. A length of the bit field is 6 bits. The 6-bit field one-to-one corresponds to a PH level in the table. Table 1 is a PH level table.

P: If an MPE reporting value is configured (that is, mpe-Reporting-FR2 is configured), and a P-MPR value meets a threshold and less than P-MPR_00, this field is set to 0 and to 1 otherwise. If an MPE reporting value is not configured (that is, mpe-Reporting-FR2 is not configured) or is configured on an FR1 frequency band, this field indicates whether power backoff caused by another reason is applied. This field is set to 1 if corresponding $P_{CMAX\_f\_c}$ has a different value and no power backoff caused by another reason is applied.

$P_{CMAX\_f\_c}$: If present, this bit field indicates $P_{CMAX\_f\_c}$ for an NR serving cell and $P_{CMAX\_f\_c}$ or $\tilde{P}_{CMAX,f,c}$ for an E-UTRA cell used for calculation of the preceding PH field. A mapping relationship between the field and a maximum transmit power that can be implemented by the NR serving cell is shown in Table 2.

MPE: If an MPE reporting value is configured (that is, mpe-Reporting-FR2 is configured), the MPE value is reported. If an MPE reporting value is not configured (that is, mpe-Reporting-FR2 is not configured), or operates on an FR1 frequency band, or a P field is set to 0, this field is a reserved field. Details may be shown in Table 3.

The following describes a PHR reporting method provided in embodiments of this application.

If it is the first resource allocated for new data transmission since the MAC is reset, periodicPHR-Timer (periodicPHR-Timer) is started.

If it is determined, in the power headroom reporting procedure, that at least one PHR has been triggered or not canceled, and if the allocated uplink resource can accommodate a control element for the PHR and a subheader corresponding to the control element in a processing procedure of logical channel prioritization, the following steps continue to be performed:

In some embodiments, if multiplePHR with a value true is configured, for each activated serving cell in which an active DL BWP is not a dormant BWP, a value of the type 1 PH or the type 3 PH of the activated cell is obtained at a physical layer; or if this MAC entity has uplink resources allocated for transmission on this activated cell or if another MAC entity has uplink resources allocated for transmission on this activated cell and phr-ModeOtherCG is set to real, a value for a corresponding $P_{CMAX,f,c}$ field is obtained from the physical layer, or a value for a MPE field (when mpe-Reporting-FR2 is configured) is obtained from the physical layer.

In some other embodiments, if multiplePHR with a value true is configured, and phr-Type2OtherCell with a value true is configured, when another MAC entity is an E-UTRA MAC entity, a value of the type 2 PH for a special cell (special cell, SpCell) is obtained, or a value for a $P_{CMAX,f,c}$ field for the SpCell (when phr-ModeOtherCG is set to real).

In some other embodiments, if multiplePHR with a value true is configured, a multiplexing and assembly procedure is instructed to transmit a multiple entry PHR MAC-CE.

In some other embodiments, for example, a single entry PHR format is used, a value of a type 1 PH is obtained from the physical layer, and a value for a $P_{CMAX,f,c}$ field is obtained. If mpe-Reporting-FR2 is configured, a value for an MPE field is obtained from the physical layer Alternatively, a multiplexing and assembly procedure is instructed to transmit a single entry PHR MAC-CE.

In some other embodiments, if this PHR report is an MPE P-MPR report, mpe-ProhibitTimer is started or restarted, or triggered MPE P-MPR reporting for serving cells included in the PHR MAC-CE is canceled.

In some other embodiments, phr-PeriodicTimer is started or restarted, or phr-ProhibitTimer is started or restarted, or all triggered PHRs are canceled.

The following describes another information transmission method provided in embodiments of this application.

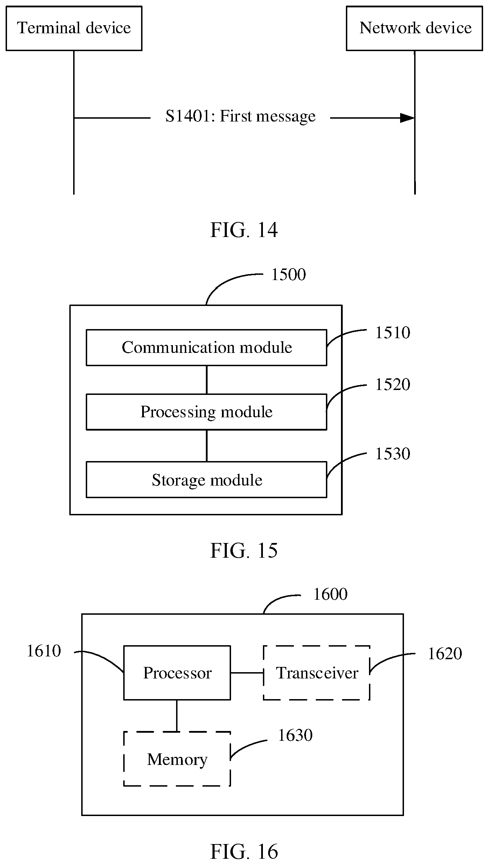

FIG. 14 shows an information transmission method according to an embodiment of this application.

In this embodiment of this application, a terminal device may include a plurality of antenna panels, and the plurality of antenna panels may include a first antenna panel.

S1401: The terminal device sends a first message to a network device, and correspondingly, the network device receives the first message.

The first message indicates a power headroom of the first antenna panel.

In some embodiments, the first message further indicates one or more of the following: a maximum transmit power of the first antenna panel, a power headroom of a second antenna panel, a maximum transmit power of the second antenna panel, a power headroom of the terminal device, or a maximum transmit power of the terminal device.

In some embodiments, the power headroom of the first antenna panel is determined based on a first calculated power and at least one of the following: the maximum transmit power of the first antenna panel or the maximum transmit power of the terminal device. The first calculated power is related to the maximum transmit power of the terminal device.

S1402: Optionally, the terminal device sends a second message to the network device, and correspondingly, the network device receives the second message.

The second message indicates the power headroom of the second antenna panel.

In some embodiments, the second message further indicates one or more of the following: the power headroom of the first antenna panel, the maximum transmit power of the first antenna panel, the maximum transmit power of the second antenna panel, the power headroom of the terminal device, or the maximum transmit power of the terminal device.

In some embodiments, the power headroom of the second antenna panel is determined based on a second calculated power and at least one of the following: the maximum transmit power of the second antenna panel or the maximum transmit power of the terminal device. The second calculated power is related to the maximum transmit power of the terminal device.

S1403: Optionally, the terminal device sends a third message to the network device, and correspondingly, the network device receives the third message.

The third message indicates the power headroom of the terminal device and/or the maximum transmit power of the terminal device.

One or more of the power headroom of the first antenna panel, the power headroom of the second antenna panel, or the power headroom of the terminal device are used to determine a transmission power of the first antenna panel and/or a transmission power of the second antenna panel.

In some embodiments, the power headroom of the terminal device is determined based on the maximum transmit power of the terminal device and one or more of the following: the maximum transmit power of the first antenna panel, the maximum transmit power of the second antenna panel, a first transmit power, and a second transmit power. The first transmit power is a transmit power associated with the first antenna panel, and the second transmit power is a transmit power associated with the second antenna panel.

In some embodiments, a type of the first message and a type of the second message are determined based on one or more of the following information: whether the first message and the second message are transmitted on a same channel; whether to trigger the first antenna panel and/or the second antenna panel to send the first message and/or the second message; or a manner of sending the first message and the second message.

When the first antenna panel and the second antenna panel are associated with different channels, the power headroom of the first antenna panel and/or the power headroom of the second antenna panel are/is further determined based on one or more of the following: a channel priority, channel content, or a channel periodicity.

Optionally, the first antenna panel and the second antenna panel are two antenna panels for simultaneous transmitting and/or simultaneous receiving.

Simultaneous transmitting or simultaneous receiving of the antenna panels may be understood as simultaneous transmitting or simultaneous receiving of a plurality of antenna panels, or that the terminal device has a capability of simultaneous transmitting or simultaneous receiving by a plurality of antenna panels. It may also be understood that data or reference signals are simultaneously transmitted or received by using a plurality of antenna panels, or the terminal device simultaneously performs measurement by using a plurality of antenna panels.

After receiving one or more of the first message, the second message, or the third message from the terminal device, the network device may determine a working status of the terminal device and working statuses of the different antenna panels based on the received message.

For example, the terminal device performs information transmission by using the first antenna panel and the second antenna panel, and the terminal device reports the power headroom $PH_1$ of the first antenna panel, the power headroom $PH_2$ of the second antenna panel, and the power headroom $PH_c$ of the terminal device to the network device based on one or more of the first message, the second message, or the third message.

Based on the power headroom $PH_c$ of the terminal device, a base station may determine whether the terminal device has an available power for data transmission.

There may be an association relationship between one or more of the power headroom $PH_1$ of the first antenna panel, the power headroom $PH_2$ of the second antenna panel, and the power headroom $PH_c$ of the terminal device. Based on the association relationship and the power headroom $PH_1$ of the first antenna panel and the power headroom $PH_2$ of the second antenna panel, the network device may determine whether the first antenna panel reaches the maximum transmit power and whether the second antenna panel reaches the maximum transmit power.

When the power headroom of the terminal device is less than or equal to 0, the network device determines that no more additional power can be scheduled from the terminal device for information transmission.

In some embodiments, the network device may further determine working statuses of the two antenna panels. If the power headroom of the first antenna panel is greater than 0, and the power headroom of the second antenna panel is less than or equal to 0, the network device may schedule a power of the first antenna panel and allocate the power to the second antenna panel.

For example, the calculated power of the first antenna panel is 20 dBm, the calculated power of the second antenna panel is 20 dBm, the maximum transmit power of the first antenna panel is 23 dBm, the maximum transmit power of the second antenna panel is 23 dBm, and the maximum transmit power of the terminal device is 23 dBm.

The terminal device may report the power headroom 0 dBm of the terminal device, the power headroom 3 dBm of the first antenna panel, and the power headroom 3 dBm of the second antenna panel.

After obtaining information about the power headroom, the network device may determine that there is no remaining power of the terminal device, but there is still a remaining power of each antenna panel. Therefore, power sharing may be performed on the plurality of antenna panels.

Similarly, for example, the calculated power of the first antenna panel is 20 dBm, the calculated power of the second antenna panel is 20 dBm, the maximum transmit power of the first antenna panel is 23 dBm, the maximum transmit power of the second antenna panel is 23 dBm, and the maximum transmit power of the terminal device is 26 dBm.

The terminal device may report the power headroom 3 dBm of the first antenna panel and the power headroom 3 dBm of the second antenna panel.

After obtaining information about the power headroom, the network device may determine that there is still a remaining power of each antenna panel. Therefore, power sharing may be performed on the plurality of antenna panels.

S1404: Optionally, configuration information sent by the network device is received.

In some embodiments, the configuration information is used to schedule the plurality of antenna panels in the terminal device to perform data transmission.

In some other embodiments, the configuration information is further used to determine transmission powers of the plurality of antenna panels in the terminal device.

The network device that obtains information such as the power headroom of the antenna panel and the power headroom of the terminal device determines the working statuses of the antenna panel and the terminal device, and may send the configuration information to the terminal device. The configuration information may be used to request to reallocate the power of the antenna panel, may be used to schedule the plurality of antenna panels in the terminal device, or the like.

In some embodiments, when the terminal device reports power headrooms of only two antenna panels, the network device may determine, based on received information about the power headrooms of the antenna panels, that the terminal device currently has a power that can be allocated or scheduled. In other words, if the terminal device reports only the power headroom of the antenna panel, it may implicitly indicate that the power headroom of the terminal device is greater than 0, or implicitly indicate that the terminal device has a power that can be allocated.

Based on a same inventive concept as that in the foregoing method embodiments, embodiments of this application further provide a communication apparatus. The communication apparatus may have a function of the terminal device or the network device in the foregoing method embodiments, and may be configured to perform steps performed by the terminal device or the network device in the foregoing method embodiments. The function may be implemented by hardware, or may be implemented by software or by hardware executing corresponding software. The hardware or the software includes one or more modules corresponding to the foregoing function.

In a possible implementation, a communication apparatus 1500 shown in FIG. 15 may be used as the terminal device used in the foregoing method embodiments, and perform the steps performed by the terminal device in the foregoing method embodiments.

As shown in FIG. 15, the communication apparatus 1500 may include a communication module 1510 and a processing module 1520. The communication module 1510 is coupled to the processing module 1520.

The communication module 1510 may be configured to support the communication apparatus 1500 in performing communication, for example, performing a sending and/or receiving action performed by the terminal device in the foregoing embodiments.

The processing module 1520 may be configured to support the communication apparatus 1500 in performing a processing action in the foregoing method embodiments, for example, performing the processing action performed by the terminal device in the foregoing embodiments.

In another possible implementation, the communication apparatus 1500 shown in FIG. 15 may be used as the network device used in the foregoing method embodiments, and perform the steps performed by the network device in the foregoing method embodiments.

As shown in FIG. 15, the communication apparatus 1500 may include the communication module 1510 and the processing module 1520. The communication module 1510 is coupled to the processing module 1520.

The communication module 1510 may be configured to support the communication apparatus 1500 in performing communication, for example, performing a sending and/or receiving action performed by the network device in the foregoing embodiments.

The processing module 1520 may be configured to support the communication apparatus 1500 in performing a processing action in the foregoing method embodiments, for example, performing the processing action performed by the network device in the foregoing embodiments.

Optionally, the communication apparatus 1500 may further include a storage module 1530, configured to store program code and data of the communication apparatus 1500.

FIG. 16 is a block diagram of a communication device 1600 according to an embodiment of this application. As shown in the figure, the communication device 1600 includes at least one processor 1610 and a transceiver 1620. The processor 1610 is coupled to a memory, and is configured to execute instructions stored in the memory, to control the transceiver 1620 to send a signal and/or receive a signal.

Optionally, the communication device 1600 further includes a memory 1630, configured to store instructions.

In some embodiments, the processor 1610 and the memory 1630 may be integrated into a processing apparatus. The processor 1610 is configured to execute program code stored in the memory 1630, to implement the foregoing functions. During specific implementation, the memory 1630 may alternatively be integrated into the processor 1610 or independent of the processor 1610.

In some embodiments, the transceiver 1620 may include a receiver (which is also referred to as a receiving machine) and a transmitter (which is also referred to as a transmitting machine).

The transceiver 1620 may further include an antenna, and there may be one or more antennas. The transceiver 1620 may be a communication interface or an interface circuit.

When the communication device 1600 is a chip, the chip includes a transceiver unit and a processing unit. The transceiver unit may be an input/output circuit or a communication interface. The processing unit may be a processor, a microprocessor, or an integrated circuit integrated on the chip.

In an implementation process, steps in the foregoing method can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

An embodiment of this application further provides a computer-readable storage medium. The computer-readable storage medium stores computer instructions for implementing the method performed by the communication device in the foregoing method embodiments.

For example, when the computer program is executed by a computer, the computer is enabled to implement the

EP 4 557 842 A1

method performed by the communication device in the foregoing method embodiments.

For explanations and beneficial effect of related content in any one of the apparatuses provided above, refer to the corresponding method embodiments provided above. Details are not described herein again.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information transmission method, wherein a terminal device comprises a first antenna panel, and the method comprises:
sending a first message, wherein the first message indicates a power headroom of the first antenna panel.

2. The method according to claim 1, wherein the terminal device comprises a plurality of antenna panels, the plurality of antenna panels comprise a second antenna panel and the second antenna panel, and the first message further indicates one or more of the following:
a maximum transmit power of the first antenna panel, a power headroom of the second antenna panel, a maximum transmit power of the second antenna panel, a power headroom of the terminal device, or a maximum transmit power of the terminal device.

3. The method according to claim 1 or 2, wherein the terminal device comprises the plurality of antenna panels, the plurality of antenna panels comprise the second antenna panel and the first antenna panel, and the method further comprises:
sending a second message, wherein the second message indicates the power headroom of the second antenna panel.

4. The method according to claim 3, wherein the second message further indicates one or more of the following:
the power headroom of the first antenna panel, the maximum transmit power of the first antenna panel, the maximum transmit power of the second antenna panel, the power headroom of the terminal device, or the maximum transmit power of the terminal device.

5. The method according to any one of claims 1 to 4, wherein the method further comprises:
sending a third message, wherein the third message indicates the power headroom of the terminal device and/or the maximum transmit power of the terminal device.

6. The method according to any one of claims 1 to 5, wherein the power headroom of the first antenna panel is determined based on a first calculated power and the maximum transmit power of the first antenna panel, and the first calculated power is a calculated power of the first antenna panel.

7. The method according to any one of claims 2 to 6, wherein the power headroom of the second antenna panel is determined based on a second calculated power and the maximum transmit power of the second antenna panel, and the second calculated power is a calculated power of the second antenna panel.

8. The method according to claim 5, wherein the power headroom of the terminal device is determined based on the maximum transmit power of the terminal device and one or more of the following:
the maximum transmit power of the first antenna panel, the maximum transmit power of the second antenna panel, the first calculated power, or the second calculated power.

9. The method according to claim 3 or 4, wherein a type of the first message and a type of the second message are determined based on one or more of the following information:

whether the first message and the second message are transmitted on a same channel;
whether to trigger the first antenna panel and/or the second antenna panel to send the first message and/or the second message; or
a manner of sending the first message and the second message.

10. The method according to any one of claims 1 to 9, wherein when the first antenna panel and the second antenna panel are associated with different channels, the power headroom of the first antenna panel and/or the power headroom of the second antenna panel are/is further determined based on one or more of the following information related to the different channels: a channel priority, channel content, or a channel periodicity.

11. The method according to any one of claims 1 to 10, wherein the first antenna panel and the second antenna panel are two antenna panels for simultaneous transmitting and/or simultaneous receiving.

12. An information transmission method, wherein the method is applied to a terminal device, the terminal device comprises a plurality of antenna panels, the plurality of antenna panels comprise a first antenna panel and a second antenna panel, and the method comprises:

sending a channel by using the first antenna panel and/or the second antenna panel, wherein a transmit power of the first antenna panel is a first transmit power, and a transmit power of the second antenna panel is a second transmit power, wherein
the first transmit power is determined based on one or more of the following:

a calculated power of the first antenna panel, a maximum transmit power of the terminal device, a maximum transmit power of the first panel, or a maximum transmit power of the second antenna panel; and
the second transmit power is determined based on one or more of the following:
a calculated power of the second antenna panel, the maximum transmit power of the terminal device, the maximum transmit power of the first panel, or the maximum transmit power of the second antenna panel.

13. The method according to claim 12, wherein if a sum of the calculated power of the first antenna panel and the calculated power of the second antenna panel is less than or equal to the maximum transmit power of the terminal device, the first transmit power is the first calculated power, and the second transmit power is the second calculated power.

14. The method according to claim 12, wherein if a sum of the calculated power of the first antenna panel and the calculated power of the second antenna panel is greater than the maximum transmit power of the terminal device, a sum of the first transmit power and the second transmit power is equal to the maximum transmit power of the terminal device.

15. The method according to claim 12, wherein if a sum of the calculated power of the first antenna panel and the calculated power of the second antenna panel is greater than the maximum transmit power of the terminal device, a sum of the first transmit power and the second transmit power is less than the maximum transmit power of the terminal device.

16. The method according to claim 14 or 15, wherein the first transmit power is directly proportional to the first calculated power, and the second transmit power is directly proportional to the second calculated power.

17. The method according to claim 14 or 15, wherein the first transmit power is directly proportional to the maximum transmit power of the terminal device, and the second transmit power is directly proportional to the maximum transmit power of the terminal device.

18. The method according to any one of claims 14 to 17, wherein neither the first transmit power nor the second transmit power is 0.

19. The method according to claim 14, wherein

the first transmit power is the first calculated power or the maximum transmit power of the terminal device; or
the second transmit power is the second calculated power or the maximum transmit power of the terminal device.

20. The method according to claim 15, wherein

the first transmit power is the first calculated power, and the second transmit power is greater than or equal to 0; or
the second transmit power is the second calculated power, and the first transmit power is greater than or equal to 0.

21. The method according to any one of claims 12 to 20, wherein the first transmit power is less than or equal to the maximum transmit power of the first antenna panel, and the second transmit power is less than or equal to the maximum transmit power of the second antenna panel.

22. The method according to any one of claims 12 to 20, wherein when the first antenna panel and the second antenna panel are associated with different channels, the first transmit power and the second transmit power are further determined based on one or more of the following information related to the different channels: a channel priority, channel content, or a channel periodicity.

23. A communication device, comprising a processor and a memory, wherein the memory is configured to store program instructions, and the processor is configured to invoke the program instructions to perform the method according to any one of claims 1 to 11.

24. A communication device, comprising a processor and a memory, wherein the memory is configured to store program instructions, and the processor is configured to invoke the program instructions to perform the method according to any one of claims 12 to 22.

25. A communication apparatus, comprising a module configured to implement the method according to any one of claims 1 to 11 or the method according to any one of claims 12 to 22.

26. A computer-readable storage medium, wherein the computer-readable storage medium stores a computer program, and when the computer program is executed by a computer, the method according to any one of claims 1 to 11 or the method according to any one of claims 12 to 22 is implemented.

27. A chip product, comprising a processor configured to read instructions stored in a memory, wherein when the processor executes the instructions, the chip is enabled to implement the method according to any one of claims 1 to 11 or the method according to any one of claims 12 to 22.

(a)

(b)

(c)

(d)

FIG. 1

(a)

(b)

FIG. 2

FIG. 3

(a)

(b)

FIG. 4

Slot

| PUSCH 1 | PUSCH 2 |
|---------|---------|

⬇ ⬇

Actual PHR 1     Actual PHR 2

| PUSCH 1 | PUSCH 2 |
|---------|---------|

⬇ ⬇

Actual PHR 1     Virtual PHR 2

Slot    Slot

| PUSCH 1 | PUSCH 2 |
|---------|---------|

⬇ ⬇

Actual PHR 1     Virtual PHR 2

| PUSCH 1 | PUSCH 2 |
|---------|---------|

⬇ ⬇

Virtual PHR 1     Virtual PHR 2

FIG. 5

Time reference    PUSCH

PHR reporting
triggering

Antenna
panel 1

PUSCH

Antenna
panel 2

PDCCH

FIG. 6

FIG. 7

| P | R | PH (type 1, primary cell) |
|---|---|---|
| MPE or R | | $P_{CMAX,f,c}$ |

(a)

| P | R | PH (antenna panel 1) |
|---|---|---|
| MPE or R (antenna panel 1) | | Maximum transmit power of the antenna panel 1 |
| P | R | PH (antenna panel 2) |
| MPE or R (antenna panel 2) | | Maximum transmit power of the antenna panel 2 |

(b)

| P | R | PH (antenna panel 1) |
|---|---|---|
| MPE or R (antenna panel 1) | | Maximum transmit power of the antenna panel 1 |
| P | R | PH (antenna panel 2) |
| MPE or R (antenna panel 2) | | Maximum transmit power of the antenna panel 2 |
| P | R | PH (terminal device) |
| MPE or R (terminal device) | | Maximum transmit power of the terminal device |

(c)

FIG. 8

| $C_7$ | $C_6$ | $C_5$ | $C_4$ | $C_3$ | $C_2$ | $C_1$ | R |
|---|---|---|---|---|---|---|---|
| P | V | PH (type 2, special cell of another MAC entity) | | | | | |
| MPE or R | | $P_{CMAX,f,c}$ 1 | | | | | |
| P | V | PH (type 1, primary cell) | | | | | |
| MPE or R | | $P_{CMAX,f,c}$ 2 | | | | | |
| P | V | PH (type X, serving cell 1) | | | | | |
| MPE or R | | $P_{CMAX,f,c}$ 3 | | | | | |

...

| P | V | PH (type X, serving cell n) |
|---|---|---|
| MPE or R | | $P_{CMAX,f,c}$ m |

FIG. 9

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| P | V | PH (type 2, special cell of another MAC entity) | | | | | |
| MPE or R | | $P_{CMAX,f,c}$ 1 | | | | | |
| P | V | PH (type 1, primary cell) | | | | | |
| MPE or R | | $P_{CMAX,f,c}$ 2 | | | | | |
| P | V | PH (type X, serving cell 1) | | | | | |
| MPE or R | | $P_{CMAX,f,c}$ 3 | | | | | |

...

| P | V | PH (type X, serving cell n) | | | | | |
| MPE or R | | $P_{CMAX,f,c}$ m | | | | | |

FIG. 10

| | | |
|---|---|---|
| P | V | PH 1 (type 1, primary cell) |
| R | V | PH 2 (type 1, primary cell) |
| MPE or R | | $P_{CMAX,f,c}$ |

| |
|---|
| Oct 1 |
| Oct 2 |
| Oct 3 |

FIG. 11

| $C_7$ | $C_6$ | $C_5$ | $C_4$ | $C_3$ | $C_2$ | $C_1$ | R |
|---|---|---|---|---|---|---|---|
| P | V | PH (type 2, special cell of another MAC entity) | | | | | |

| $C_7$ | $C_6$ | $C_5$ | $C_4$ | $C_3$ | $C_2$ | $C_1$ | R |
|---|---|---|---|---|---|---|---|
| P | V | PH (type 2, special cell of another MAC entity) | | | | | |
| MPE or R | | $P_{CMAX,f,c}$ 1 | | | | | |
| P | V | PH 1 (type 1, primary cell) | | | | | |
| R | V | PH 2 (type 1, primary cell) | | | | | |
| MPE or R | | $P_{CMAX,f,c}$ 2 | | | | | |
| P | V | PH 1 (type X, serving cell 1) | | | | | |
| R | V | PH 2 (type X, serving cell 1) | | | | | |
| MPE or R | | $P_{CMAX,f,c}$ 3 | | | | | |

...

| P | V | PH 1 (type X, serving cell n) | | | | | |
|---|---|---|---|---|---|---|---|
| R | V | PH 2 (type X, serving cell n) | | | | | |
| MPE or R | | $P_{CMAX,f,c}$ m | | | | | |

FIG. 12

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| P | V | PH (type 2, special cell of another MAC entity) | | | | | |
| MPE or R | | $P_{CMAX,f,c}$ 1 | | | | | |
| P | V | PH 1 (type 1, primary cell) | | | | | |
| R | V | PH 2 (type 1, primary cell) | | | | | |
| MPE or R | | $P_{CMAX,f,c}$ 2 | | | | | |
| P | V | PH 1 (type X, serving cell 1) | | | | | |
| R | V | PH 2 (type X, serving cell 1) | | | | | |
| MPE or R | | $P_{CMAX,f,c}$ 3 | | | | | |

...

| P | V | PH 1 (type X, serving cell n) | | | | | |
|---|---|---|---|---|---|---|---|
| R | V | PH 2 (type X, serving cell n) | | | | | |
| MPE or R | | $P_{CMAX,f,c}$ m | | | | | |

FIG. 13

Terminal device

Network device

S1401: First message

FIG. 14

1500

Communication module — 1510

Processing module — 1520

Storage module — 1530

FIG. 15

1600

1610 — Processor — Transceiver — 1620

Memory — 1630

FIG. 16

<table>
<tr><td colspan="2" align="center">**INTERNATIONAL SEARCH REPORT**</td><td>International application No.<br>**PCT/CN2023/103839**</td></tr>
</table>

**A.    CLASSIFICATION OF SUBJECT MATTER**

H04W52/36(2009.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 功率余量, 剩余, 通知, 消息, 最大发送功率, 天线组, 天线面板, 指示, 定向, 波束, 信噪比, 5G NR, antenna, panel, PCI, antenna group, report, power, headroom

**C.    DOCUMENTS CONSIDERED TO BE RELEVANT**

| Category* | Citation of document, with indication, where appropriate, of the relevant passages | Relevant to claim No. |
|---|---|---|
| X | US 2021377876 A1 (OFINNO, LLC) 02 December 2021 (2021-12-02)<br>   claims 1-20, and description, paragraphs [0355]-[0531] | 1-27 |
| X | CN 110972288 A (HUAWEI TECHNOLOGIES CO., LTD.) 07 April 2020 (2020-04-07)<br>   claims 1-31, and description, paragraphs [0449]-[0538] | 1-27 |
| X | WO 2021022894 A1 (HUAWEI TECHNOLOGIES CO., LTD.) 11 February 2021<br>(2021-02-11)<br>   claims 1-17, and description, p. 6, line 24 to p. 20, line 32 | 1-27 |
| A | CN 113365336 A (VIVO COMMUNICATION TECHNOLOGY CO., LTD.) 07 September<br>2021 (2021-09-07)<br>   entire document | 1-27 |
| A | CN 114374403 A (CHENGDU HUAWEI TECHNOLOGIES CO., LTD.) 19 April 2022<br>(2022-04-19)<br>   entire document | 1-27 |

☐ Further documents are listed in the continuation of Box C.          ☑ See patent family annex.

| | | |
|---|---|---|
| *   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family | |

| Date of the actual completion of the international search | Date of mailing of the international search report |
|---|---|
| **13 September 2023** | **20 September 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

International application No.

**PCT/CN2023/103839**

| Patent document cited in search report | | | Publication date (day/month/year) | Patent family member(s) | | | Publication date (day/month/year) |
|---|---|---|---|---|---|---|---|
| US | 2021377876 | A1 | 02 December 2021 | EP | 3925317 | A1 | 22 December 2021 |
| | | | | WO | 2020168296 | A1 | 20 August 2020 |
| CN | 110972288 | A | 07 April 2020 | US | 2020107341 | A1 | 02 April 2020 |
| | | | | US | 11337235 | B2 | 17 May 2022 |
| | | | | EP | 4181604 | A1 | 17 May 2023 |
| | | | | ES | 2936987 | T3 | 23 March 2023 |
| | | | | EP | 3657880 | A4 | 27 May 2020 |
| | | | | EP | 3657880 | A1 | 09 November 2022 |
| | | | | US | 2022256567 | A1 | 11 August 2022 |
| | | | | US | 11737082 | B2 | 22 August 2023 |
| | | | | WO | 2020062971 | A1 | 02 April 2020 |
| | | | | BR | 112021006018 | A2 | 29 June 2021 |
| | | | | BR | 112021006018 | A8 | 06 July 2021 |
| | | | | JP | 2022501964 | A | 06 January 2022 |
| WO | 2021022894 | A1 | 11 February 2021 | CN | 112350754 | A | 09 February 2021 |
| CN | 113365336 | A | 07 September 2021 | WO | 2021175178 | A1 | 10 September 2021 |
| CN | 114374403 | A | 19 April 2022 | WO | 2020192408 | A1 | 01 October 2020 |

Form PCT/ISA/210 (patent family annex) (July 2022)

**EP 4 557 842 A1**